# EUROPÄISCHE PATENTSCHRIFT

(11) **EP 1 958 826 B1**
(45) Veröffentlichungstag und Bekanntmachung des Hinweises auf die Patenterteilung: **07.10.2009**
(21) Anmeldenummer: 07003210.7
(22) Anmeldetag: 15.02.2007
(51) Int. Cl.: B60R 15/04

(54) **Raumsparendes Toilettensystem**
Space saving toilet system
Système de toilettes économisant de l'espace

(43) Veröffentlichungstag der Anmeldung: 20.08.2008
(73) Patentinhaber: Dometic GmbH, 57074 Siegen (DE)
(72) Erfinder: Wunderlich, Frank, 57250 Netphen (DE); Müller, Volker, 57271 Hilchenbach (DE)
(74) Vertreter: Grosse - Schumacher - Knauer - von Hirschhausen

(56) Entgegenhaltungen:
- EP-A1- 0 404 537
- WO-A-20/05053490

## Beschreibung

Die Erfindung betrifft ein Toilettensystem für den Fahrzeugeinbau nach dem Oberbegriff des Anspruchs 1 sowie ein mit einem solchen Toilettensystem ausgerüstetes Fahrzeug nach dem Oberbegriff des Anspruchs 16 bzw. eine entsprechende Verwendung.

Der Begriff "Fahrzeug" wird hier im weiteren Sinne verwendet und umfasst auch Schienen-, Luft- und Wasserfahrzeuge - wenngleich die Erfindung weit überwiegend nur für Wohnmobile und Caravans ("Campingfahrzeuge") von Bedeutung ist.

Gerade bei Campingfahrzeugen kommt es auf eine optimale Ausnutzung des zur Verfügung stehenden Bauraums an. Die zunehmend zur Standardausstattung solcher Fahrzeuge gehörende Nasszelle ist trotz aller von ihr geforderten Funktionalität so klein zu halten wie irgend möglich. Denn die Nasszelle wird nur wenige Minuten pro Tag benutzt, beschränkt aber die Größe des den weit überwiegenden Teil der Zeit genutzten Wohnraums.

Weiterhin gehört es heute durchgängig zum Standard, dass der der Toilette zugeordnete und mit ihr - zur Vermeidung einer zusätzlichen Fäkalpumpe - eine Baugruppe bildende Fäkaltank in einem separaten Staufach untergebracht ist. Das Staufach ist von außen über eine in der Fahrzeugwand angebrachte Serviceklappe zugänglich. Auf diese Art und Weise kann der Fäkaltank herausgezogen und unabhängig vom Fahrzeug zu den heute weit verbreiteten Entsorgungsstationen für Chemietoiletten gebracht und dort entleert werden.

Dies wirft für den Konstrukteur der Fahrzeugaufbauten Probleme auf. Denn der recht sperrige Abwassertank kann i. d. R. nur an einigen wenigen Positionen des Fahrzeugs sinnvoll untergebracht werden. Dies zum einen deshalb, weil im Regelfall auf die Radkästen des Anhängerfahrgestells oder als Basisfahrgestell dienenden Leichttransporters Rücksicht genommen werden muss. Eine Reihe anderer, technisch möglicher Einbaupositionen kommt nicht in Betracht, weil die Toilette bzw. Nasszelle nicht "mitten in den Wohnraum" hineinragen kann. Zusätzliche Probleme ergeben sich, wenn der Fahrzeugkonstrukteur die Vorgabe umsetzen möchte, vom als langweilig empfundenen rechtwinkligen Standardgrundriss abzuweichen und z. B. eine dreieckige oder schräg verlaufende Nasszelle vorzusehen. Dies deshalb, weil bei den herkömmlichen Toilettensystemen in dem Moment, in dem die Einbaulage des Abwassertanks festgelegt wird (nämlich parallel oder rechtwinklig zur Fahrzeuglängsachse) zugleich auch die Position festgelegt wird, in der der Nutzer später auf der Toilette sitzt - nämlich ebenfalls parallel oder rechtwinklig zur Fahrzeuglängsachse. Es leuchtet ein, dass dadurch die Gestaltungsmöglichkeiten für die kleine Nasszelle stark eingeschränkt werden. In diesem Zusammenhang ist rein beispielhaft auf das aus der Offenlegungsschrift EP 0 248 511 A1 bekannte Toilettensystem zu verweisen.

Um dem abzuhelfen schlagen die gattungsbildende Anmeldung EP 0 404 537 A1 bzw. das darauf in leicht abgewandelter Form erteilte Patent ein Toilettensystem vor, das aus einem sog. Basisabschnitt besteht, der den Abwassertank beherbergt und die hier "Beckenabschnitt" genannte Toilettenschüssel trägt, derart, dass von der Toilettenschüssel in den unterhalb befindlichen Abwassertank gespült werden kann. Das hier vorgeschlagene Toilettensystem basiert auf der Grundidee, den Verbindungsstutzen zwischen der Toilettenschüssel und dem Abwassertank mit einer beweglichen Dichtung zu versehen und damit die Toilettenschüssel als Ganze gegenüber dem Basisabschnitt drehbar zu machen. Die EP 0 404 537 lehrt, dass die Toilettenschüssel vom Hersteller des Fahrzeugs bzw. seiner Aufbauten innerhalb bestimmter Grenzen gegenüber dem Basisabschnitt und dem Abwassertank verdreht und dann am Basisabschnitt festgesetzt werden. Das Toilettensystem kann damit herstellerseitig ggf. so eingestellt werden, dass Benutzung der Toilette auch schräg zur Einschubrichtung des Abwassertanks erfolgen kann. Das gibt dem Fahrzeug- bzw. Aufbauhersteller eine deutlich größere Gestaltungsfreiheit im Hinblick auf den Grundriss der Nasszelle. Diese Lösung ist zudem praktisch, denn die Form der Toilettenschüssel ist der menschlichen Anatomie angepasst, indem die Schüssel links und rechts deutlich schmäler ist als vorne und hinten - durch die Verdrehung der gesamten Toilettenschüssel wird stets ein anatomisch richtiges Sitzen gewährleistet. Darüber hinaus gewährleistet das Verdrehen der ganzen Toilettenschüssel einen effizienten Abtransport fester Fäkalien. Denn die Spüldüse bestreicht wegen des Verdrehens der ganzen Toilettenschüssel mit ihrem Strahl auf kürzestem Weg stets genau denjenigen hinteren Bereich der Toilettenschüssel, der am dringendsten saubergespült werden muss. Das ist wegen der nur begrenzten Tankkapazitäten von Freizeitfahrzeugen von einiger Bedeutung.

Mit diesem Lösungsansatz, die Toilettenschüssel mit ihrem Flansch in der Tanköffnung rotieren zu lassen, sind indes auch einige prinzipbedingte, recht gravierende Nachteile verbunden.

Der Dichtungssatz zwischen dem Abwassertank und der Toilettenschüssel ist, schon bei nicht drehbaren Toilettenschüsseln, ein neuralgischer Punkt. Denn der Dichtungssatz muss dauerhaft funktionstüchtig bleiben und auch nach vielfachem An- und Abkoppeln des Abwassertanks noch zuverlässig funktionieren - obwohl er starker Verschmutzung durch Fäkalien und durchweichtes Toilettenpapier ausgesetzt ist. Verlangt man von dem Dichtungssatz zusätzlich auch noch eine, wenn auch nur einmalige Drehbarkeit, schafft man zusätzliche Fehlerquellen. Denn Drehbarkeit gestattende Dichtungen dürfen zwangsläufig nur eine begrenzte Reibung gegenüber dem zu drehenden Bauteil entfalten und müssen daher mit einer geringeren Dichtpressung zurecht kommen als statische Dichtungen.

Speziell bei der ganz konkret von der EP 0 404 537 vorgeschlagenen Lösung tut sich zusätzlich auch noch das Problem auf, dass der Flansch der hier nur dürftig gegenüber dem Basisabschnitt abgestützten Toilettenschüssel, über den die untere Öffnung der Toilettenschüssel mit dem Abwassertank kommuniziert, durch das Gewicht des Toilettenbenutzers belastet wird. Dies insbesondere dann, wenn dieser in der Enge der oft zugleich auch als Stauraum (z. B. für nasse Surf-, Tauch- und Skianzüge, Strandtücher oder Motorradkombis) genutzten Nasszelle schräg auf der aus nachgiebigem Kunststoff gefertigten Toilette sitzt oder diese gar während der Fahrt nutzt - was in der Praxis auch immer wieder vorkommt. Es erfordert einigen Herstellungs- bzw. Materialaufwand, die voll im Kraftfluss liegende, bewegliche Trennfuge zwischen der Toilettenschüssel und dem Basisabschnitt so starr hinzubekommen, dass Störungen dauerhaft ausgeschlossen sind. Besondere Probleme bereitet dies, das sei hier bereits am Rande erwähnt, bei der Verwendung von mit Keramikeinsätzen ausgerüsteten Toilettenschüsseln, bei denen sich in dem besagten Bereich auch noch das Problem auftut, dass der Keramikeinsatz dauerhaft gegenüber dem aus Kunststoff bestehenden Trägerabschnitt der Schüssel abgedichtet werden muss.

Die EP 0 404 537 spricht überall ausschließlich davon, dass die Toilettenschüssel vom Fahrzeughersteller bzw. Aufbautenhersteller in die gewünschte Position gedreht und dort fest installiert werden soll - so dass der Benutzer das Toilettensystem dann nur noch in einer einzigen Position wirklich bestimmungsgemäß benutzen kann, d. h. in der vorgesehenen, ergonomisch richtigen Lage, auf die die Gestaltung der Toilettenschüssel und ihrer Brille von Haus aus abgestimmt sind. Selbst wenn der Fachmann durch diese Druckschrift dazu angeregt worden wäre, die Funktionalität der Drehbarkeit auch dem Endnutzer zur Verfügung zu stellen, wäre damit nicht viel gewonnen - die konkret von der EP 0 404 537 vorgeschlagene Lösung, bei der die Toilettenschüssel nach dem Drehen mit einem stehkragenartigen Flansch zu verschrauben ist, um die Toilettenschüssel festzusetzen, ist kaum dazu angetan, regelmäßig vom Endnutzer verstellt zu werden. Ganz abgesehen davon, dass ein solches regelmäßiges Verstellen durch den Endnutzer die Abdichtungsproblematik noch entscheidend verschärft hätte.

Schließlich ist bei der von der EP 0 404 437 vorgeschlagenen Lösung von Nachteil, dass prinzipbedingt nur um die Mittelachse des Ablaufs der Toilettenschüssel gedreht werden kann. Die Positionierung des Ablaufs und damit die Ausgestaltung der Toilettenschüssel müssen hier also stets mit Rücksicht auf die erforderliche Drehbarkeit erfolgen.

Ein weiterer Nachteil ist, dass die Spülwasserzufuhr zur Toilettenschüssel nicht durch eine klapperfrei und fest vorinstallierte, mithin entsprechend zuverlässige Leitung zwischen dem Basisabschnitt und der Toilettenschüssel erfolgen kann. Stattdessen ist in jedem Fall ein loser Schlauch zwischen dem Basisteil und der Toilettenschüssel erforderlich - oder die Spülwasserleitung kann vom Fahrzeug- bzw. Aufbautenhersteller erst nach dem endgültigen Festsetzen der Toilettenschüssel installiert werden. Letzteres läuft dem "plug & play"-Bedürfnis der Hersteller zuwider, das auf mit wenigen Handgriffen einbaubare Einheiten ausgerichtet ist.

Es ist Aufgabe der Erfindung, die genannten Nachteile im Wesentlichen zu vermeiden.

Der Erfindung liegt die Erkenntnis zu Grunde, dass die besagten Nachteile im Wesentlichen durch das grundlegende Prinzip des bekannten Toilettensystems mit seiner drehbaren Schüssel bedingt sind und daher von diesem Prinzip abgerückt werden muss. Erfindungsgemäß ist daher vorgesehen, dass die Toilettenschüssel (d. h. die Baueinheit aus dem Toilettenbecken und seiner Tragstruktur, soweit nicht ohnehin einstückig) in einer relativ zur Basis vorgegebenen Position fest mit der Basis verbunden ist, nämlich fest in dem Sinne, dass sie nicht gegenüber der Basis verdreht werden muss, um die optimale Sitzposition des Nutzers auf der Toilette zu verändern, und dass zumindest der obere Randabschnitt der Toilettenschüssel im Wesentlichen rund ist und die Brille gegenüber der Toilettenschüssel in verschiedene, unterschiedlich gegenüber der Vertikalachse des oberen Randabschnitts der Toilettenschüssel gedrehte Stellungen gebracht und vorzugsweise in diesen Stellungen an der Toilettenschüssel festgesetzt werden kann, wobei der Begriff des Festsetzens nicht die Auf- und Zuklappbarkeit der Brille tangiert. Kurz zusammengefasst lässt sich sagen, dass der grundlegende Ansatz der Erfindung der ist, eine Verdrehbarkeit der Brille relativ zur Toilettenschüssel vorzusehen.

Alternativ oder zuätzlich zur Verdrehbarkeit der Brille ist vorgesehen, dass die Brille im Wesentlichen rund ist. Im Wesentlichen bedeutet dabei, dass insbesondere in dem Bereich, an dem die Brille anscharniert ist, Abweichungen von der Rundheit unproblematisch sind - der entscheidende Gedanke ist, dass die Brille derart rund ist, dass sie bevorzugt Sitzpositionen zwischen 16 und 20 Uhr ermöglicht, ohne dass der Benutzer in diesem Bereich das merkliche Gefühl hat, dass ihn die Brille drückt und er eigentlich "falsch sitzt". Anders als die bekannten, Rücksicht auf die Körperform nehmenden Brillen, die eine bevorzugte Position vorgeben, gibt die Brille über einen weiten Bereich hinweg also keine bevorzugte Sitzposition vor. Stattdessen ermöglicht sie es dem Benutzer ohne nennenswert spürbare Unterschiede in Bezug auf den Sitzkomfort in unterschiedlich gegenüber der Vertikalachse des oberen Randabschnitts gedrehten Positionen auf der Toilette Platz zu nehmen.

Das ermöglicht nicht nur "low-budget"-Lösungen, die, um auch noch "das Letzte" an Kosten zu sparen, auf einen optionalen Verstellmechanismus für die Brille verzichten, sondern auch Lösungen, die ausgesprochen praktisch sind - weil der Benutzer nicht erst Position der Brille verändern muss, um sich schnell einmal "schräg" auf die Toilette zu setzen und so dem frontal vor der Toilette zum Trocknen aufgehängten Skianzug oder dem dort hängenden Surfanzug "auszuweichen". Diese in der Praxis immer wieder anzutreffende Situation vor Augen sieht man, dass die Verwendung einer im Sinne der Erfindung runden Brille für ein Toilettensystem in einem Campingfahrzeug ausgesprochen praktisch ist.

Generell wird dabei unter dem Begriff "oberer Randabschnitt" der schmale, vorzugsweise in etwa drei bis zehn Zentimeter hohe, als solcher auch im oben diskutierten Stand der Technik vorzufindende Bereich verstanden, der die dem Benutzer zugewandte Öffnung der Schüssel umrandet bzw. den größten Außendurchmesser der Schüssel vorgibt. Dabei muss der obere Randabschnitt selbstverständlich nicht vom Rest der Toilettenschüssel abgesetzt sein, sondern kann absatzlos in diesen übergehen.

Idealerweise ist nicht nur der obere Randabschnitt, sondern die gesamte Toilettenschüssel bzw. zumindest deren Außenkontur rund, beispielsweise kegelstumpfförmig.

Der insoweit für die Erfindung entscheidende Aspekt ist funktionaler Natur - bei den bekannten Schüsseln mit durchweg ovaler oder elliptischer oberer Öffnung lässt sich der entsprechend gestaltete Toilettensitz nur in einer einzigen Position sinnvoll montieren, da er sich in anderen Positionen nicht sinnvoll benutzbar mit der darunter liegenden Öffnung der Schüssel zur Deckung bringen lässt. Dies vermeidet die Erfindung durch die runde Gestaltung des oberen Randabschnitts.

Der Vollständigkeit halber ist noch festzuhalten, dass der obere Randabschnitt selbstverständlich nur im Wesentlichen rund sein muss, d. h. kleinere, die angestrebte Funktion nicht beeinträchtigende Abweichungen von der Rundform sind möglich. So kann, nur um ein anschauliches Beispiel zu geben, der obere Randabschnitt ohne weiteres auch als vieleckiger, sich der Kreisform nähernder Polygonzug gestaltet sein.

Der entscheidende Vorteil der Erfindung ist in allen Fällen, dass sich die Toilettenschüssel, auch wenn sie ein gegenüber der Basis separates Bauteil darstellt, fest mit der Basis verbinden lässt, indem zwischen ihr und der mit ihr verschraubten Basis eine entsprechend stark angepresste Dichtung zum Einbau kommt oder die Schüssel gar mit der Basis verschweißt oder verklebt wird. Damit ist die Schwachstelle der bisher vorgeschlagenen Konstruktion, nämlich die auf Drehbarkeit ausgelegte und voll im Kraftfluss liegende Trennfuge zwischen der Toilettenschüssel und der Basis eliminiert. Die Zahl der Fugen, in die Fäkalien eindringen können (wenn es auch nicht zu einem Austritt nach außen kommen mag), ist vermindert. Zugleich lässt sich auf diesem Wege sehr einfach ein stabiler Verbund zwischen der Basis und dem Toilettenbecken herstellen. Die Leitung, die die Toilettenschüssel mit Spülwasser versorgt, kann vom Toilettenhersteller fest vorinstalliert werden. Der Fahrzeug- bzw. Aufbautenhersteller hat nur noch an zentraler Stelle an der Basis die Spülwasserzuführ anzuklemmen.

Da der obere Randabschnitt der Toilettenschüssel (im Gegensatz zu dem zum Abwassertank führenden Verbindungsflansch der Toilettenschüssel) keinen nennenswerten Biege- bzw. Kippmomenten ausgesetzt ist, lässt sich der dort angeordnete Mechanismus zur variablen Befestigung der Brille als simples, aber funktionssicheres Kunststoffteil herstellen.

Eine vorteilhafte Weiterbildung der Erfindung sieht vor, dass der obere Randabschnitt der Toilettenschüssel von einem in verschiedenen Verdrehstellungen, vorzugsweise werkzeuglos und durch Verrastung, montierbaren Abdeckring übergriffen wird. Dieser Abdeckring trägt an einer Seite einen Lagerabschnitt, an dem die Brille und vorzugsweise auch ein die Brillenöffnung abdeckender Deckel auf und zu schwenkbar angelenkt sind. Werkzeuglos heißt dabei nicht, dass von der Benutzung jeglicher, simpler Hilfsmittel abgesehen werden muss, sondern grenzt gegenüber Servicearbeiten ab, die üblicherweise nur mit Schraubenschlüsseln, entsprechendem Know-How und Zeitaufwand durchgeführt werden können.

Der Abdeckring mit seinem Lagerabschnitt gestattet eine hygienisch einwandfreie Befestigung der Brille und ggf. auch des Deckels in verschiedenen Verdrehstellungen. Anders als bei einer Haushaltstoilette, sind bei einer solchen Konstruktion nicht mehr verschiedene, verschmutzungsanfällige Bohrungen erforderlich, in denen die Brille je nach Bedarf mittels entsprechender Einsteckstifte montiert werden kann, durch Verschraubung von unten her. Stattdessen sind die Brille und ggf. auch der Deckel immer an der gleichen Stelle mittels eines einfach sauber zu haltenden Lagerabschnitts an dem Abdeckring befestigt. Der Abdeckring kann seinerseits bündig, das heißt im Wesentlichen ohne schmutzfangende Fugen und ggf. auch abgedichtet in verschiedenen Verdrehstellungen am oberen Randabschnitt der Toilettenschüssel montiert werden.

Eine andere vorteilhafte Weiterbildung sieht vor, dass der Abdeckring so ausgestaltet und am oberen Randabschnitt gehalten ist, dass er zusammen mit der an ihm gehaltenen Brille und ggf. auch dem an ihm gehaltenen Deckel durch den Toilettenbenutzer verdreht werden kann, in eine ihm als individuellem Benutzer momentan genehme Position. Eine solche Ausgestaltung bringt gegenüber der vorbekannten Konstruktion wesentliche Vorteile. Nunmehr kann der Toilettenbenutzer von Fall zu Fall selbst bestimmen, in welcher Position er auf der Toilette Platz nehmen will. Dies ist gerade bei Campingfahrzeugen deswegen ausgesprochen praktisch, weil die Nasszelle immer wieder als dauerhafter oder vorübergehender Abstell- bzw. Trockenraum dient, beispielsweise für nasse Surf- oder Tauchanzüge, nasse Motorradkombis, nasse Skianzüge, Strandhandtücher oder im Einzelfall einfach auch nur als Abstellraum für allerhand andere schnell aus dem Weg zu räumende Gegenstände, vom Bierkasten bis zum Tennisschläger. Sobald der Toilettenbenutzer die Möglichkeit hat, die Sitzposition auf der Toilette mit wenigen Handgriffen schnell selbst zu bestimmen, ist er nicht mehr gezwungen die Nasszelle leer zu räumen, bevor er die Toilette in vernünftiger Sitzposition benutzen kam. Stattdessen kann er sich kurzerhand mit den in der Nasszelle lagernden Gegenständen "arrangieren".

Eine weitere vorteilhafte Weiterbildung sieht vor, dass der Abdeckring nach Art einer drehbaren Gleitführung auf dem oberen Randabschnitt läuft, die durch einen Rastmechanismus blockiert wird. Dabei kann der Rastmechanismus durch den Toilettenbenutzer werkzeuglos deaktiviert werden, um den Abdeckring zu verdrehen, ohne ihn vom oberen Randabschnitt abzunehmen. Typischerweise gleitet der Abdeckring bei einer solchen Konstruktion nicht vollflächig auf dem oberen Randabschnitt, sondern wird beispielsweise an drei jeweils in etwa 120° voneinander beabstandeten Stellen geführt. Der Rastmechanismus besteht typischerweise aus einer toilettenschüsselfesten Rastnase, die in eine am Abdeckring innenseitig umlaufend angebrachte Verzahnung eingreift und so eine ausgesprochen feinfühlige Verstellung des Abdeckrings gestattet. Selbstverständlich ist auch eine umgekehrte Gestaltung möglich, das da heißt, dass die Toilettenschüssel die Rastflächen trägt und der Abdeckring die Rastnase.

Vorteilhafterweise umfasst das Toilettensystem einen Deckel, der in geschlossenem Zustand im Wesentlichen nur die Öffnung der Brille abdeckt. Dabei wird zumindest ein wesentlicher Teil der Brille im linken und rechten Seitenbereich des Deckels nicht vom Deckel übergriffen, sondern bleibt auch bei geschlossenem Deckel frei. Hiermit hat es folgende Bewandtnis: Je nachdem, in welcher Position der Deckel aktuell an der Toilettenschüssel angebracht ist, gibt es immer wieder Situationen, in denen der Deckel sich nicht weit genug aufklappen lässt, sondern mit einer seiner Seiten vorzeitig an der schräg zu ihm verlaufenden Wand der Nasszelle anschlägt - und dadurch nicht von allein in vollständig offener Stellung bleibt, sondern dem Benutzer immer wieder "in den Rücken fällt". Dies kann verhindert werden, indem die Breite des Deckels in Richtung parallel zu seiner Schwenkachse vermindert wird, so, wie hier vorgeschlagen. Dabei wird der Deckel vernünftigerweise so gestaltet, dass er entlang seines gesamten Außenumfangs die Brille ein gewisses Stück weit überlappt und sich so über seinen gesamten Außenumfang hinweg auf der Brille abstützt. Auf diese Art und Weise wird verhindert, dass der Deckel in dem Moment, in dem sich der Toilettenbenutzer auf die geschlossene Toilette setzt, etwa um sich anzuziehen, mit einem übermäßigen Biegemoment beaufschlagt wird und zu Bruch geht. Idealerweise überlappt der Deckel die Brille im linken und rechten Seitenbereich jeweils etwa zwischen 1,5 bis 5 cm.

Vorzugsweise ist zwischen dem Abdeckring und dem Toilettenbecken ein im Normalfall als separates Bauteil gestalteter und als Auflager für den Abdeckring dienender Verteilerring angeordnet, der zusammen mit einem in ihn eingesetzten oder integrierten Lochring ein Kanalsystem bildet. Ein Kanalsystem, das das Spülwasser, von einer zentralen Spülwassereinspeisung ausgehend, den oberen Randabschnitt des Toilettenbeckens entlang leitet und über entsprechende Öffnungen im Wesentlichen ringsum entlang des oberen Randabschnitts in das Toilettenbecken einleitet, vorzugsweise durch einen Spalt zwischen dem den Verteilerring übergreifenden Abdeckring und dem Toilettenbecken.

Zum einen vereinfacht eine derartige Ausgestaltung die Herstellung des erfindungsgemäßen Toilettensystems wesentlich. Eine Haushaltstoilette ist typischerweise einstückig geformt und weist im oberen Randbereich der Schüssel einen umlaufenden rahmenartigen Abschnitt auf, dem über verborgene Kanäle das Spülwasser zugeleitet wird und der für die halbwegs gleichmäßige Verteilung des Spülwassers sorgt - wobei es bei den Haushaltstoiletten auf Grund der großen Spülwassermenge nicht besonders auf eine gleichmäßige Verteilung der Spülwassers ankommt. Bei dem hier in Rede stehenden Toilettensystem, das typischerweise aus Kunststoff oder einem Verbund aus Kunststoff und Keramik hergestellt ist, ist ein einstückiges Anformen der Spülwasserführung unwirtschaftlich - es gilt den Werkzeugaufwand zu vermindern und die Anzahl der im Werkzeug benötigten Schieber möglichst klein zu halten. Wesentlich effizienter ist es stattdessen, den spülwasserführenden Verteilerring als ein separates Bauteil herzustellen und zusammen mit dem Abdeckring auf der Toilettenschüssel zu montieren. Nämlich so, dass der aus leicht zu reinigendem und eine hochwertige Anmutung vermittelnden Material bestehende Abdeckring den Verteilerring abdeckt. Letzterer kann dann seinerseits aus einem anderweitigen Konstruktionswerkstoff bestehen, welcher weniger Rücksicht auf die optische Anmutung und die Reinigung seiner Oberfläche nehmen muss.

Zum anderen ergänzt bzw. verbessert eine derartige Spülwasserführung das Konzept, es dem Benutzer zu ermöglichen, sich in verschiedenen Positionen auf die Toilettenschüssel zu setzen, in idealer Weise. Denn anders als bei den bekannten Systemen, die das Spülwasser nur lokal oder in bestimmten Bereichen einspülen, lässt sich mit der erfindungsgemäßen Spülwasserführung sicherstellen, dass es stets zu einem genügenden Abtransport fester Fäkalien kommt, gleich, in welcher Position die Toilettenschüssel benutzt wird und in welcher Position die Fäkalien folglich auf das Toilettenbecken treffen. Eine Einleitung des Spülwassers in das Toilettenbecken ringsum entlang des oberen Randabschnitts bedeutet dabei nicht unbedingt, dass das Spülwasser wirklich an jeder einzelnen Stelle des oberen Randabschnitts in das Toilettenbecken eingeleitet werden müsste. Es kann durchaus so sein, dass gewisse Bereiche, von denen angesichts des Maßes, um das die Brille bei dem konkreten Toilettensystem verstellbar ist, anzunehmen ist, dass sich in ihnen keine festen Fäkalien ablagern, ausgespart werden - schon aus dem Grund, um Spülwasser zu sparen. Es kann beispielsweise so sein, dass das Spülwasser nur in einem Bogen von etwa 270° entlang des oberen Randabschnitts in das Toilettenbecken eingeleitet wird und beispielsweise der - im Regelfall - vorne liegende Bereich des Toilettenbeckens nicht direkt überspült wird. Maßgeblich sind letztendlich funktionale Überlegungen. Ideal ist eine Einleitung in einem Bereich von mehr als 330°.

Eine weitere bevorzugte Ausgestaltungsform sieht vor, dass die Öffnungen in dem Verteilerring als lokale Löcher ausgestaltet sind, die in Abstimmung auf den nominalen Einspeisedruck des Spülwassers so dimensioniert und ausgerichtet sind, dass das Spülwasser nach Art eines Vorhangs aus einer Anzahl einzelner Strahlen in das Toilettenbecken eingespült wird. Dabei erstreckt sich der Vorhang im Wesentlichen entlang des gesamten Umfangs des oberen Randabschnitts. Nämlich derart, dass sämtliche Oberflächenbereiche der Schüssel, auf denen sich bei bestimmungsgemäßer Benutzung des Toilettensystems feste Fäkalien ablagern können, bestrichen werden. Sinnvollerweise sind die Öffnungen des Lochrings und die Förderleistung bzw. der Förderdruck der Spülwasserpumpe dabei so aufeinander abgestimmt, dass das Spülwasser in das Toilettenbecken eingespritzt wird, im Optimalfall mit einer Strahlgeschwindigkeit von > 1,2 m/s, besser > 1,8 m/s.

Idealerweise sind die Löcher dabei so ausgestaltet, dass sich in ihnen nicht dauerhaft Kalkablagerungen bilden können. Dies deshalb, weil die Löcher verhältnismäßig klein sind. Das ist erforderlich, um mittels der Löcher jeweils einen verhältnismäßig schnellen Strahl erzeugen zu können, der bei geringer Wassermenge eine gute Spülwirkung hat. Ähnlich wie bei Duschbrausen besteht daher vom Grundsatz her die Gefahr des Verkalkens dieser relativ kleinen Löcher. Das Problem wird insbesondere dadurch gelöst, dass die Löcher durch sogenannten Zweikomponentenspritzguss an dem ihre Austrittsöffnung begrenzenden Rand mit einem Wulst aus weichelastischem Material versehen werden. Dieser Wulst ragt vorzugsweise in das Innere des Verteilerrings hinein, anstatt nach außen in Richtung des Inneren des Toilettenbeckens abzustehen. Dieser Wulst aus weichelastischem Material verformt sich unter dem Einfluss der Druckstöße, die beim Betätigen der Spülung entstehen. Er sprengt dadurch eventuelle Kalkablagerungen ab, zumindest sobald diese eine kritische Dicke erreicht haben. Aus hygienischen Gründen ist es sinnvoll, jeden Wulst wie beschrieben in das Innere des Verteilerrings hineinragen zu lassen, um so Schmutz- und Bakterienablagerungen möglichst zu unterbinden.

Um das Konzept der Erfindung weiter abzurunden ist vorgesehen, die bestimmungsgemäß mit Fäkalien beaufschlagbare Innenoberfläche des Toilettenbeckens so zu gestalten, dass sie an allen Stellen eine hinreichende Neigung gegenüber dem Auslass der Toilettenschüssel aufweist - um so eine Rampe zu bilden, die die Fäkalien spätestens beim Spülen selbsttätig abrutschen lässt, hin zum Auslass. Geeignete Rampenwinkel gegenüber der Horizontalen sind vorzugsweise größer als ca. 30°, idealerweise größer als 40°. Der am Ende geeignete Rampenwinkel hängt nicht zuletzt von den Gleiteigenschaften der benetzten Beckenoberfläche ab. Welche Rampenwinkel im Einzelfall geeignet sind, lässt sich z. B. mit Hilfe des sogenannten "Sägemehltests" bestimmen bzw. näher eingrenzen. Dabei wird zunächst die gesamte mit Fäkalien beaufschlagbare Oberfläche des Toilettenbeckens mit Wasser benetzt. Sodann werden - gleichmäßig über die besagte Oberfläche verteilt - 20 Gramm Sägemehl üblicher Körnung in das Becken eingestreut. Der (5-fach zu wiederholende) Test ist bestanden, wenn nach jedem Spülvorgang weniger als 50 cm² der Schüsseloberfläche nicht vollständig vom Sägemehl freigespült worden sind. Ein Bestehen des Tests signalisiert "Rampenwinkel im konkreten Fall im brauchbaren Bereich", während dort, wo Rückstände verbleiben, der Rampenwinkel erhöht werden muss.

Aus diesem Grunde lassen sich neben den hygienischen Eigenschaften auch die Gleiteigenschaften und damit die sichere Abfuhr fester Fäkalien bei vorgegebenem Rampenwinkel verbessern, wenn zumindest der Bereich des Toilettenbeckens, der bestimmungsgemäß mit den Fäkalien in Berührung kommt, aus Sanitärkeramik hergestellt ist. Mithin fördert die Verwendung eines Keramikbeckens die eigentliche Erfindung, die ja wegen der unterschiedlichen Sitzpositionen auf der Toilettenschüssel besonders darauf angewiesen ist, dass sich alle Bereiche des Toilettenbeckens zuverlässig sauberspülen lassen.

Eine weitere Verbesserung lässt sich erzielen, wenn zumindest der Abschnitt des Toilettenbeckens, der bestimmungsgemäß mit den Fäkalien in Berührung kommt, mit einer HygieneSchicht ausgerüstet ist, vorzugsweise mit einer schmutzabweisenden Schicht, Antihaftschicht bzw. einer schmutzabweisenden Nanoschicht. Letzterenfalls stellt sich der im Volksmund "Lotusblatt-Effekt" genannte Effekt ein, so dass alle wasserlösliche Substanzen abperlen und verstärkt abrutschen, statt die Oberfläche benetzen. Speziell bei Verwendung einer schmutzabweisenden Beschichtung bzw. Antihaftschicht und insbesondere einer Nanobeschichtung ergibt sich ein symbiotischer Effekt im Zusammenhang mit den primären erfinderischen Maßnahmen. Eine solche Schicht bzw. Beschichtung fördert nämlich das vollständige und saubere Ausspülen des Toilettenbeckens - und zwar auch dann, wenn hierfür nur wenig Wasser zur Verfügung steht und das Toilettenbecken in verschiedenen Sitzpositionen (16 Uhr, 18 Uhr 20 Uhr usw.) benutzt wird, es also keinen Sinn macht, auf einige wenige Stellen einen besonders starken Spülwasserstrahl zu richten.

Dabei sind hier nicht Nanoschichten gemeint, die nachträglich in der Art von Haushaltsreinigern aufgesprüht oder aufgerieben werden können, sondern handelsübliche Beschichtungen oder Schichten, die bei der Herstellung der Toilettenschüssel fest und dauerhaft mit deren Oberfläche verbunden werden, weil sich Nanopartikel mit den Oberflächenrauhigkeiten des Trägermaterials verzahnen und sozusagen in die äußersten Schichten des Trägermaterials eindringen oder sogar in diese eingearbeitet sind. Eine geeignete Nanobeschichtung wird z. B. von der Firma Starnberger Beschichtungen GmbH, D-82303 Starnberg unter der Marke "Nanofinish" angeboten, es handelt sich um eine konturnachbildende und unterwanderungsstabile Dünnschicht in Plasmatechnologie mit Antihafteigenschaften. Alternativ kann z. B. die von der Firma Hillebrandt Coating Technologies, Westerhaar 60, D-58739 Wickede/Ruhr unter der Marke NFC angebotene Nanobeschichtung verwendet werden. Ggf. können, soweit das Toilettenbecken aus Kunststoff hergestellt wird, auch Kunststoffblends verwendet werden, die einen entsprechenden Gehalt an Nanopartikeln aufweisen, um die gewünschte Oberflächenbeschaffenheit und damit eine entsprechende Schicht (zumindest) an der Oberfläche zu erreichen.

Am Rande sei dabei erwähnt, dass es sich - unabhängig von der beanspruchten Erfindung - als ausgesprochen vorteilhaft erwiesen hat, auch die Innenoberfläche des Abwassertanks mit einer solchen Nanoschicht bzw. -oberfläche auszurüsten. Dies erleichtert die hygienisch einwandfreie Reinigung des Tanks, die bei den meisten Fahrzeugen regelmäßig erforderlich ist, um das Fahrzeug überwinterungsfertig zu machen, wesentlich - dem Benutzer bleibt es erspart, fäkale Inkrustierungen, die sich an schlecht zugänglichen, innenliegenden Stellen im Lauf des Jahres angesammelt haben, abkratzen oder den Tank erst umständlich trocknen zu müssen, um Gasbildung durch die Inkrustierungen zu vermeiden. Stattdessen hat es für ihn meist mit einem sorgfältigen Ausspritzen des Tanks mit einem Wasserschlauch sein Bewenden. Gerade beim Abwassertank empfiehlt es sich allerdings, nicht erst nachträglich innen eine Beschichtung aufzubringen, sondern den Tank aus einem mit Nanopartikeln gefüllten Kunststoffblend herzustellen, wie beispielsweise von der Firma Süd Chemie AG, Lenbachplatz 6, D-80333 München in Kooperation mit der Firma Putsch Kunststoffe, Wiesbadener Str. 13D, 90427 Nürnberg angeboten.

Eine weitere vorteilhafte Ausführungsform sieht vor, dass der beim Abziehen der Toilette zu betätigende Verschluss zum Öffnen und Schließen des Tanks, zusammen mit dem vom Benutzer hierzu zu bedienenden Betätigungsorgan, ausschließlich am Abwassertank befestigt ist. Um trotzdem eine Betätigung bei eingesetztem Tank zu ermöglichen, weist die Basis eine mit dem Abwassertank abgestimmte Wand (vorzugsweise ist das die Vorderwand) auf, die mit einer Betätigungsöffnung ausgestattet ist. Sobald der Abwassertank in Gebrauchsposition ist, erscheint der vom Abwassertank getragene Handgriff zur Betätigung des Verschlusses in dieser Betätigungsöffnung und kann von der Nasszelle aus betätigt werden. Eine solche Konstruktion ist wesentlich einfacher, als die bislang vom Stand der Technik vorgeschlagene Lösung. Letztere sieht nämlich vor, dass die Basis ein separates Betätigungsorgan für das Öffnen und Schließen des Verschlusses trägt, das beim Einschieben des Abwassertanks an diesen angekoppelt wird und bei seinem Herausziehen wieder abgekoppelt wird. Derartiges erfordert nicht nur zusätzliche Bauteile, sondern vor allem solche Bauteile, die nicht unerhebliche Kräfte übertragen müssen und daher entsprechend massiv zu dimensionieren sind, damit sie nicht irgendwann ermüden.

Eine weitere Verbesserung ergibt sich, wenn im Bereich der Betätigungsöffnung eine schwenkbare Klappe vorgesehen ist, die beim Einsetzen des Abwassertanks aufgedrückt, dann durch den Abwassertank in ihrer geöffneten Position außerhalb der Betätigungsöffnung gehalten wird und nach dem Entfernen des Abwassertanks die Betätigungsöffnung hineinschwenkt und diese verschließt - vorzugsweise weitgehend geruchsdicht. Ein solches Verschließen ist nicht nur aus optischen Gründen sinnvoll. Vielmehr wird dadurch verhindert, dass es zu einem nennenswerten Luftaustausch zwischen der Nasszelle und dem hinter der Betätigungsöffnung liegenden Abteil zur Aufnahme des Tanks kommt, wenn der Tank ausgebaut ist. Auf diese Art und Weise wird im Wesentlichen verhindert, dass von eventuellen Fäkalspritzern verursachte Gerüche und verhältnismäßig kalte Luft aus dem zur Aufnahme des Tanks vorgesehen Abteil in die Nasszelle eindringen. Umgekehrt wird verhindert, dass, beispielsweise beim Duschen, feuchtigkeitsgesättigte Luft aus der Nasszelle in das für den Tank vorgesehene, kältere Abteil eindringt und dort auskondensiert oder gar Spritzwasser in das Abteil gelangt.

Idealerweise geht von der Klappe eine Signalwirkung aus, die darauf hinweist, dass die Toilette wegen des herausgenommenen Tanks nicht betriebsbereit ist. Der Art der hier in Frage kommenden Signalwirkung sind keine Grenzen gesetzt. Man kann sich einen von der Klappe betätigten Kontakt vorstellen, der ein elektrisches Warnsignal erzeugt, und/oder die Spülwasserpumpe ausschaltet und/oder (unmittelbar mechanisch oder mittels eines elektrischen Aktuators) den Toilettendeckel verriegelt - was eine Premiumlösung darstellt. Für preisgünstige Lösungen reicht es aber auch aus, die Klappe in einer auffälligen Farbe zu gestalten und so den Benutzer optisch darauf hinzuweisen, dass momentan kein Tank eingebaut ist.

Zusätzlich oder alternativ kann eine direkte Abfrage des Tanks vorgesehen sein, d. h. sobald der Tank herausgenommen ist, wird dies durch einen geeigneten, direkt auf den Tank ansprechenden Aktuator signalisiert, der wiederum irgendwelche der oben beschriebenen Vorsichtsmaßnahmen veranlasst.

Eine weitere Verbesserung des erfindungsgemäßen Toilettensystems ergibt sich, wenn man den Durchmesser bzw. die Außenkontur der Toilettenschüssel 3 (genauer: Des Toilettenschüsselgehäuses 3b) so wählt, dass die Projektion der Toilettenschüssel in vertikaler Richtung von oben nach unten im Wesentlichen nicht über die Grundfläche der Basis hinausragt, jedenfalls nicht um mehr als 5 cm.

Eine derartige Gestaltung der Toilettenschüssel 3 führt zu einer besonders guten Raumausnutzung. Denn zumindest die Länge und Breite der Basis wird im Wesentlichen durch das Format des Tanks 15 vorgegeben, der in dem durch den Hohlraum der Basis 2 gebildeten Serviceabteil untergebracht ist. Es ist also letztendlich die Basis 2, die die Größe der Mindestgrundfläche vorgibt, die das Toilettensystem im Fahrzeug bzw. in der Nasszelle benötigt. Ein Toilettensystem, dessen Toilettenschüssel 3 (von oben gesehen) nicht seitlich über die von der Basis 2 beanspruchte Grundfläche hinausragt, ist daher in idealer Weise raumsparend.

Es ist gerade der Gedanke, nicht die gesamte Toilettenschüssel 3 drehbar zu machen, sondern eine Schüssel bzw. ein Becken mit zumindest kreisrunder Öffnung vorzusehen, auf der sich die Brille 6 (und ggf. der zugehörige Deckel 7) drehen lassen, der einer derartigen weiteren Ausgestaltung Vorschub leistet. Denn in dem Moment, in dem nicht die gesamte Toilettenschüssel 3 um ihren Ablauf gedreht wird, sondern nur die Brille 6 um die Schüssel 3, ergeben sich deutlich mehr Freiheiten bei der Gestaltung der Schüssel, als bei dem bekannten Toilettensystem, bei dem die Toilettenschüssel wegen ihrer Drehbarkeit auf die vom Abwassertank vorgegebene Lage der Ablauföffnung Rücksicht nehmen muss.

Selbst wenn man auf den Gedanken käme, das im Stand der Technik bekannt gewordene Toilettensystem so zu gestalten, dass die Schüssel nicht nur vom Fahrzeughersteller, sondern auch vom Benutzer gedreht werden kann, hat die hier vorgeschlagene Ausgestaltung der Erfindung ihre Vorteile. Um eine in Benutzungsstellung in den Raum hinein über die Basis auskragende Toilettenschüssel nach der Benutzung in eine raumsparendere Position zu drehen (beispielsweise um einen besseren Zugang zur dicht neben der Toilette angeordneten Dusche herzustellen), muss sie jedes Mal angefasst werden, was vielfach als unangenehm empfunden wird.

Weitere Vorteile und Ausgestaltungsmöglichkeiten der Erfindung ergeben sich aus dem nachfolgend beschriebenen Ausführungsbeispiel. Es zeigen:
- Fig. 1:: eine Seitenansicht des erfindungsgemäßen Ausfiihrungsbeispiels bei geöffneter Brille und geöffnetem Deckel;
- Fig. 2:: eine Draufsicht auf das Ausführungsbeispiel unmittelbar von oben, bei in Offenstellung geschwenkter Brille und in Offenstellung geschwenktem Deckel;
- Fig. 3a:: eine Draufsicht auf das erfindungsgemäße Ausführungsbeispiel von oben, bei geschlossener Brille und geschlossenem Deckel, in einer ersten Position von Brille und Deckel;
- Fig. 3b:: eine Draufsicht auf das erfindungsgemäße Ausführungsbeispiel von oben, bei geschlossener Brille und geschlossenem Deckel, in einer zweiten Position von Brille und Deckel, die hier gewählt wurde, um das Toilettensystem platzsparend in einer designerisch ansprechend gestalteten, weil zur Mitte des Wohnraums hin abgerundeten Nasszelle unterbringen zu können;

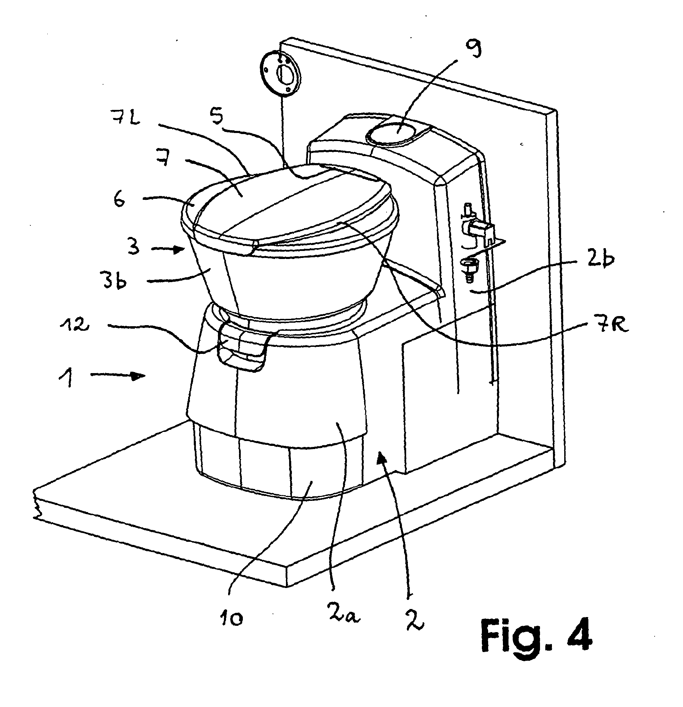

- Fig. 4:: eine anderweitige Seitenansicht des erfindungsgemäßen Ausführungsbeispiels bei geschlossener Brille und geschlossenem Deckel;
- Fig. 5:: eine Frontalansicht der erfindungsgemäßen Ausführungsform, und
- Fig. 6:: eine Darstellung der erfindungsgemäßen Ausführungsform im Mittelschnitt durch den Ablauf des Toilettenbeckens;
- Fig. 7:: eine Detailansicht des linken oberen Randbereichs der in Fig. 6 dargestellten Toilettenschüssel;
- Fig. 8: die Fig. 8a bzw. 8b sind Einzelteilzeichnungen der von Fig. 7 gezeigten Bauteile, nämlich jeweils den Verteilerring mit eingesetztem Lochring, bzw. zusätzlich den Lochring in Alleinstellung.
- Fig. 9: eine abgewandelte Ausführungsform mit einem speziellen Vorratstank für Spülwasser bzw. Sanitärzusätze in einer der Fig. 6 entsprechenden Darstellung,
- Fig. 10: die Fig. 10 a bis d zweigen ein zweites Ausführungsbeispiel der Erfindung in Form einer sogenannten "Bank-Lösung", nämlich die Fig. 10 a perspektivisch schräg von oben, die Fig. 10b frontal von vorne (d. h. der Schmalseite der Bank her), die Fig. 10c senkrecht von oben - während die Fig. 10d eine Seitenansicht von der Breitseite der Bank her zeigt.
- Fig. 11: die Fig. 11 a und b zeigen weitere Ansichten des bereits von den Fig. 10 gezeigten Ausführungsbeispiels, hier jedoch mit verdrehter Brille.
- Fig. 12: die Fig. 12a bis c zeigen ein drittes Ausführungsbeispiel der Erfindung, nämlich wiederum in form einer sogenannten "Stand-alone-Lösung", jedoch mit kreisrundem Deckel.

Das Toilettensystem 1 besteht vom Grundsatz her aus zwei Komponenten, nämlich der Basis 2 und der Toilettenschüssel 3. Die Basis setzt sich ihrerseits aus dem einen Tankabteil bildenden Basisabschnitt 2a und dem damit verbundenen, eine Installationsabdeckung bildenden Basisabschnitt 2b zusammen.

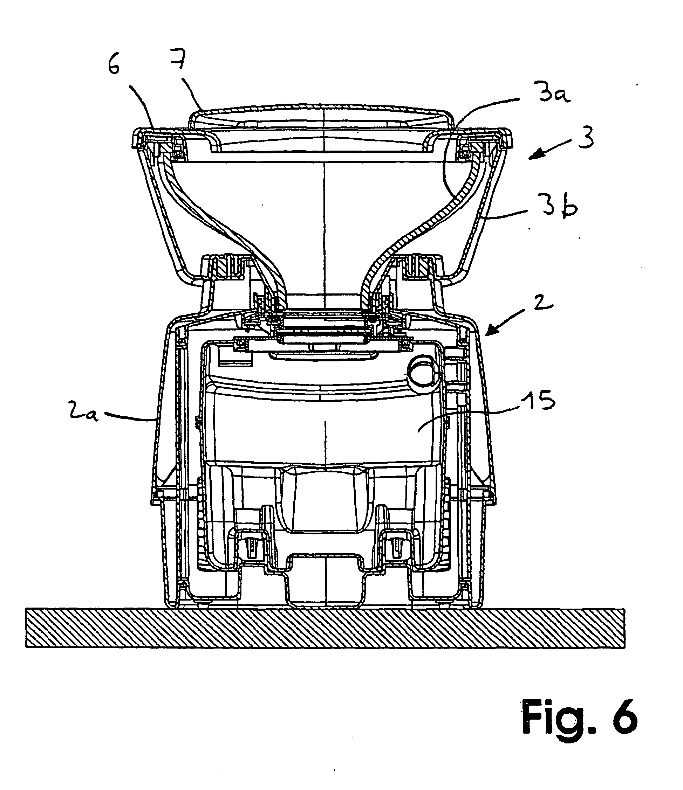

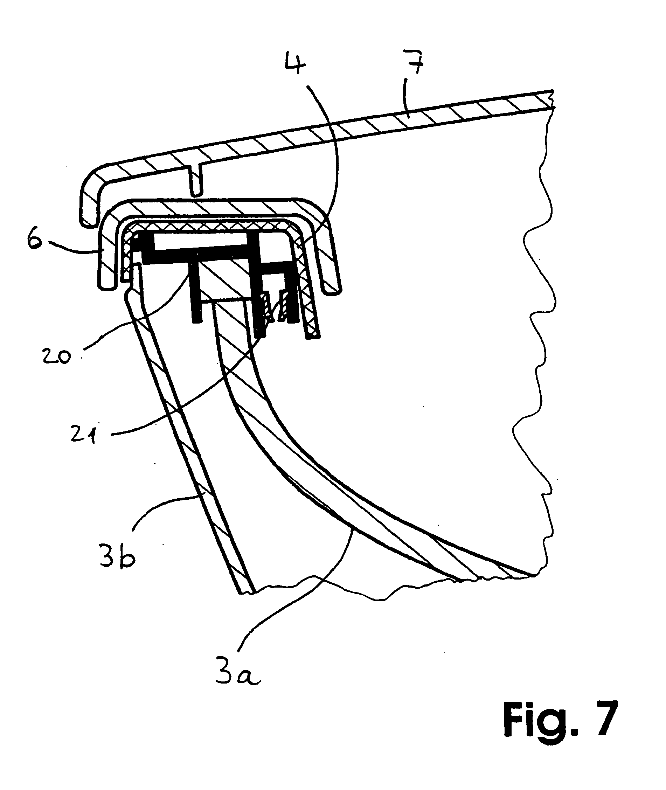

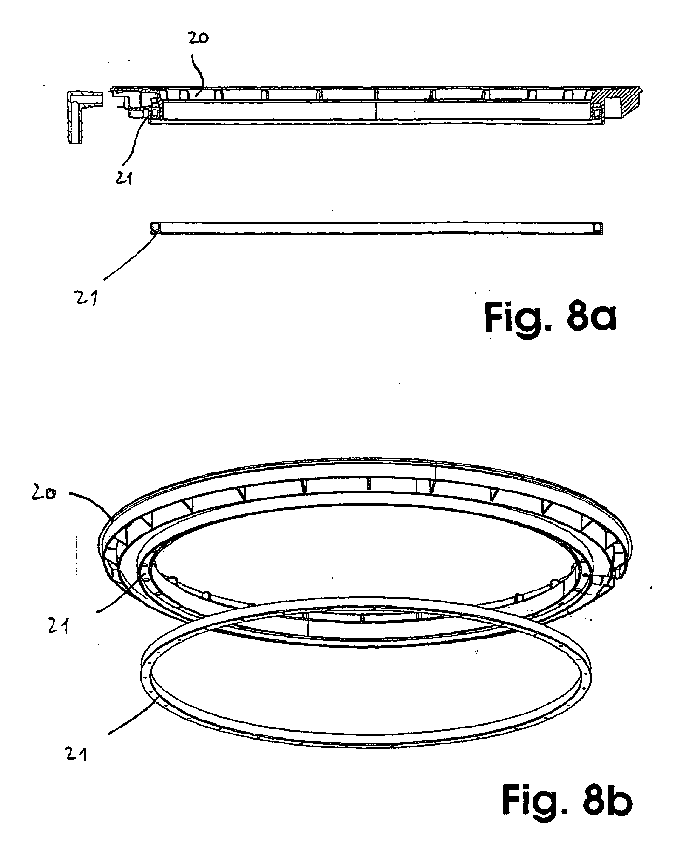

Die Fig. 6, 7, 8a und 8b zeigen den genaueren Aufbau des Toilettensystems. Die Toilettenschüssel 3 ist ihrerseits aus verschiedenen Teilen zusammengesetzt, nämlich unter anderem aus dem eigentlichen, die Fäkalien empfangenden Toilettenbecken 3a, dem Schüsselgehäuse 3b, dem Abdeckring 4 und dem Verteilerring 20, der hier seinerseits mit einem separaten Lochring 21 ausgestattet ist, vgl. insbes. Fig. 7. Der Verteilerring 20 hat an einer Seite einen Anschluss für die von der Spülwasserpumpe kommende Speiseleitung. Er bildet zusammen mit dem von ihm aufgenommenen Lochring 21 einen über 360 Grad hinweg oberhalb des Randes des Toilettenbeckens 3a angeordneten Kanal, d. h. es wird hier wirklich rundum eingespült.

Der Verteilerring 20 wird rundum von dem Abdeckring 4 abgedeckt, welcher in verschiedenen Positionen auf dem Verteilerring 20 verrastet werden kann. I. d. R. sind der Verteilerring 20 und der Abdeckring 4 gegeneinander abgedichtet, was hier nicht dargestellt wird. Der Abdeckring 4 ist so ausgestaltet, dass zwischen ihm und dem Toilettenbecken ein nach unten offener Bereich freibleibt, durch den hindurch der Lochring 21 des Verteilerrings 20 in das Toilettenbecken 3a einspült.

Das eigentliche Toilettenbecken 3a ist hier als kelchförmiger Einsatz aus Sanitärkeramik hergestellt, der fest vom Schüsselgehäuse 3b gehalten wird, nämlich im unteren Bereich von einem entsprechenden Flansch des Schüsselgehäuses 3b bzw. der Basis 2 (vgl. Fig. 6) und im oberen Bereich mittels des Verteilerrings 20 und des Abdeckrings 4, die in Verbindung mit dem Schüsselgehäuse 3b stehen (vgl. Fig. 7). Dabei ist das Schüsselgehäuse 3b, wie auch fast alle anderen Bauteile außer dem Toilettenbecken 3a, aus Kunststoff. Im Rahmen von Low-cost-Lösungen kann auch das Toilettenbecken 3a aus Kunststoff sein, wobei es dann aber in besonderem Maße ratsam ist, eine Antihaft-Schicht vorzusehen.

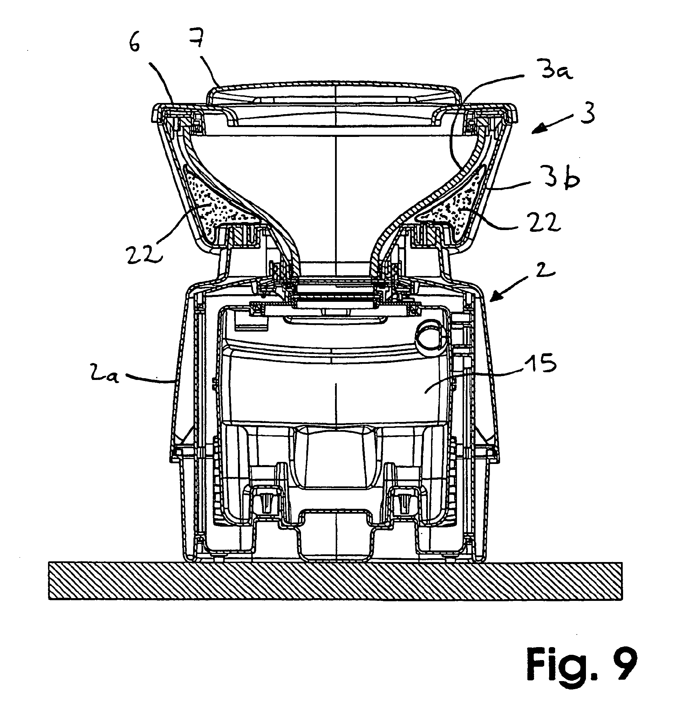

Am Rande ist anzumerken, dass der in Fig. 6 zu erkennende Zwischenraum zwischen dem Schüsselgehäuse 3b und der Toilettenschüssel 3a dazu genutzt werden kann, um Speziallösungen zu realisieren, etwa im Premium-Komfortbereich oder für Expeditionsfahrzeuge, die ohne besondere Rücksicht auf etwaige Kosten so raumsparend wie möglich ausgestattet werden müssen. Wie die Fig. 9 veranschaulicht, ist es nämlich möglich, zwischen dem Schüsselgehäuse 3b und der Toilettenschüssel 3a einen Schlauch- bzw. Falttank einzubauen, der einen zusätzlichen Spülwasservorrat oder einen Vorrat an chemischen Zusätzen aufnimmt. Die chemischen Zusätze können dann bei Bedarf (z. B. über eine entsprechende Pumpeinrichtung) zudosiert werden, um die Toilettenschüssel zu behandeln ("Deo") oder Fäulnis im Tank zu vermeiden. Das bisherige, auf manche Benutzer recht "unbehauen" wirkende "Einschütten der Toilettenchemie aus der Flasche (womöglich durch das Toilettenbecken hindurch) in den Tank" entfällt dann. Insbesondere besteht ggf. die Möglichkeit, automatisch zuzudosieren, so dass stets eine hinreichende aber nicht überschüssige Menge an Chemie in den Abwassertank gelangt.

Die Toilettenschüssel 3 und die Basis 2 werden üblicherweise als separate Bauteile hergestellt. Sie sind jedoch fest miteinander verbunden, nämlich so gestaltet, dass sie in einer einzigen, werksseitig vorgegebenen Relativposition zueinander verschraubt oder vernietet werden können oder in dieser Position miteinander verschweißt sind (vgl. Fig. 6). Letzteres gewährleistet eine besonders haltbare und dauerhaft zuverlässige Verbindung. Statt einer Verschraubung ist selbstverständlich auch eine entsprechende Verrastung der Bauteile aneinander möglich.

Auch der den Tankraum bildende Basisabschnitt 2a und der eine Installationsabdeckung bildende Basisabschnitt 2b werden üblicherweise als separate Teile gefertigt und dann aneinander montiert. Da zwischen diesen Teilen keine besonderen Dichtigkeitsanforderungen gestellt werden, bedient man sich zum Zwecke der Montage dieser Bauteile im Regelfall einer Verrastung, so auch hier beim gezeigten Ausführungsbeispiel.

An der Basis 2 ist deutlich der umlaufende Bodenwannenflansch 10 zu erkennen. Der Bodenwannenflansch korrespondiert im Regelfall mit einem entsprechend ausgeformten Kragen, der in der die Nasszelle bodenseitig abdichtenden Kunststoff-Bodenwanne vorzufinden ist, die i. d. R. auch gleich als Duschwanne fungiert. Das Toilettensystem wird dann von oben dichtend in diesen Kragen eingesetzt.

Im rückwärtigen Bereich des Bodenwannenflansches 10 ist zudem der Installationsdurchlass 8 zu erkennen, der u. a. dazu dient, eine in oder gegen Fahrzeugfahrtrichtung verlaufende Warmluftleitung das Toilettensystem passieren zu lassen und eine vom Frischwassertank kommende Spülwasserversorgungsleitung sowie die erforderlichen elektrischen Anschlussleitungen hinter den die Installationsabdeckung bildenden Basisteil 2b zu führen.

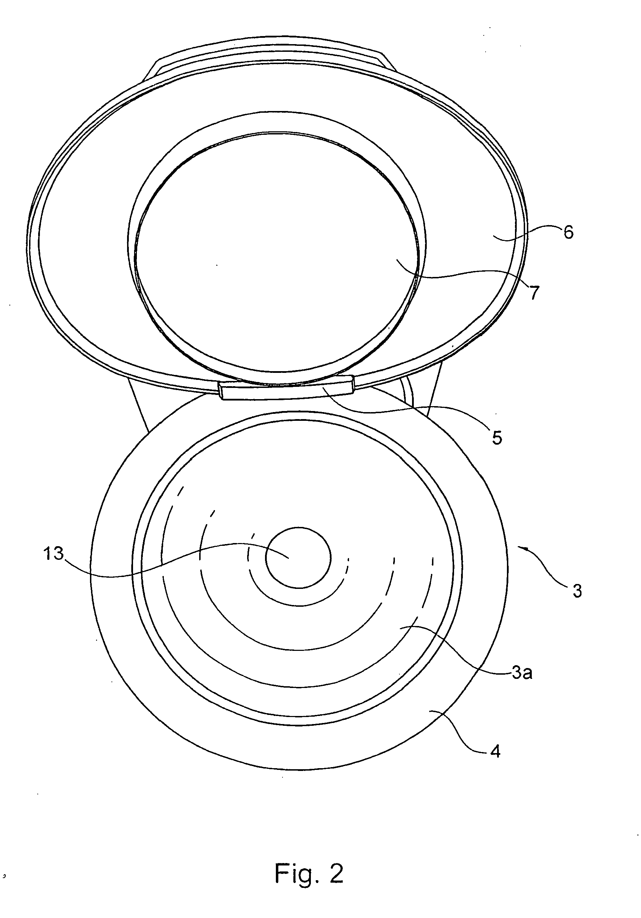

Das erfindungsgemäße Funktionsprinzip lässt sich am besten an Hand einer gleichzeitigen Betrachtung der Fig. 2, 3a und 3b und 7 erklären.

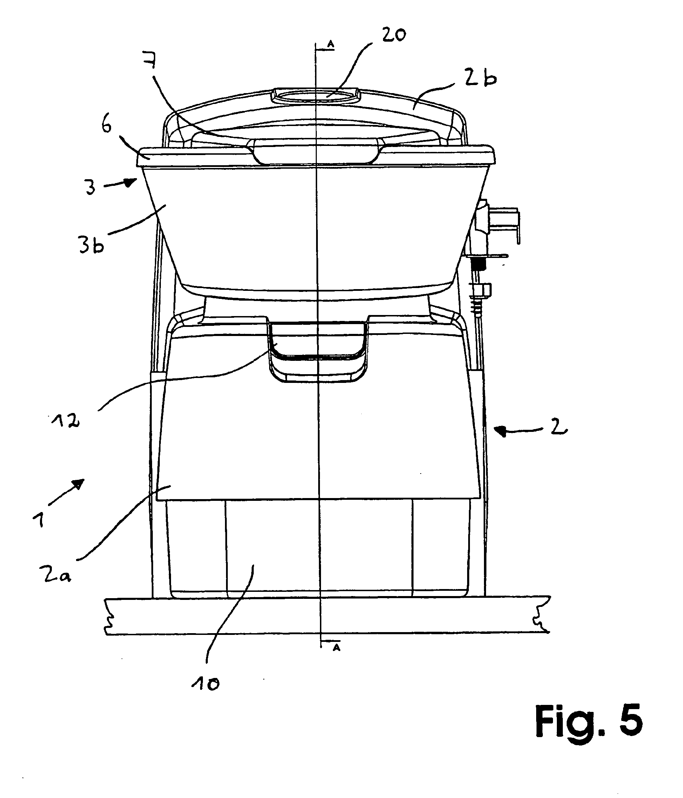

Die Toilettenschüssel 3 hat bei dem erfindungsgemäßen Ausführungsbeispiel die Außenkontur eines kreisrunden Kegelstumpfs, der sich nach unten zur Basis 2 hin verjüngt, vgl. auch Fig. 5. Auf Grund dieser Ausgestaltung gibt die Toilettenschüssel 3 ihrerseits keine bevorzugte Sitzposition vor. Stattdessen kann die Toilettenschüssel 3, wenn man sich vorstellt, dass der die Installationsabdeckung bildende Basisabschnitt 2b die 12-Uhr-Position bestimmt, ohne weiteres in Sitzpositionen zwischen 3 und 9 Uhr benutzt werden.

Bei der einfachsten und kostengünstigsten Ausführungsform der Erfindung (nicht zeichnerisch dargestellt) ist auch die (ggf. nicht einmal verstellbare) Brille kreisrund, d. h. im Wesentlichen rotationssymmetrisch gestaltet. Hierdurch wird es möglich, dass die besagten Sitzpositionen ohne spürbare Komforteinbußen eingenommen werden können und ohne vorher die Position der Brille zu verändern. Für den Benutzer ergibt sich in diesem, simpelsten Fall lediglich in extremen Sitzpositionen nahe 3 und 9 Uhr eine gewisse Komforteinbuße, da er in diesen Positionen den aufgeklappten Deckel nahe seiner Linken oder Rechten hat und nicht, wie bei Toiletten gewohnt, im Rücken. Dementsprechend rund muss die Brille sein - so dass sie zwischen > 15:30 Uhr und < 20:30 Uhr im Wesentlichen komfortable Sitzpositionen ermöglicht.

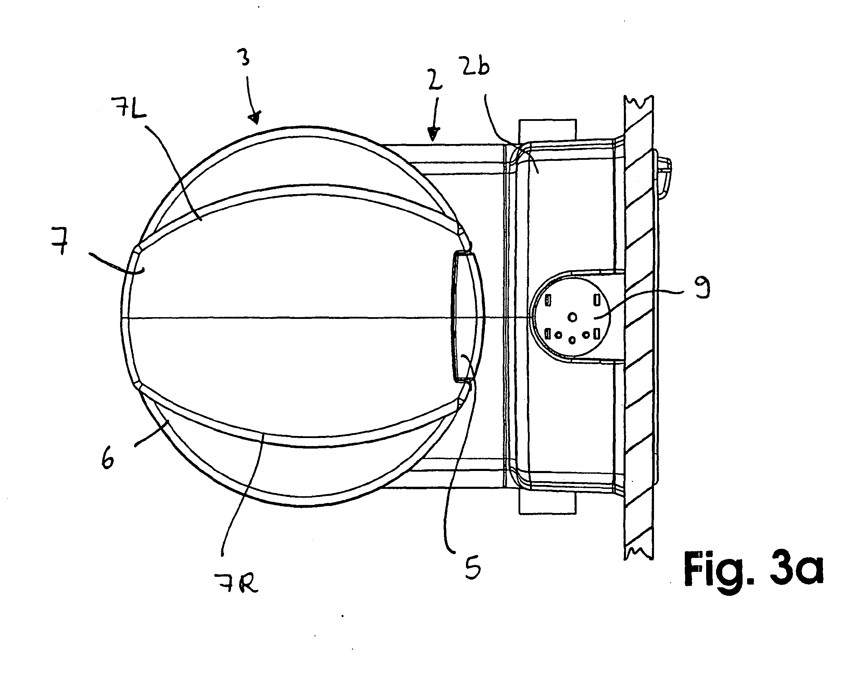

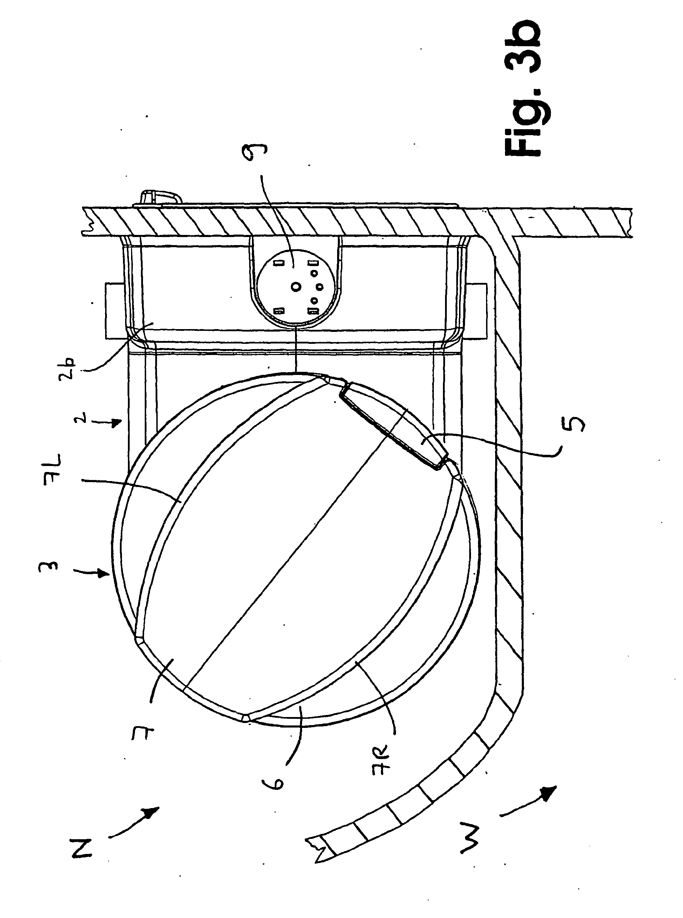

Um den Benutzungskomfort weiter zu erhöhen, sind daher bei dem hier gezeigten Ausführungsbeispiel die Positionen der Brille 6 und des Deckels 7 veränderbar. Zu diesem Zweck ist von oben auf das Schüsselgehäuse 3b ein Abdeckring 4 aufgerastet, der, wie man am besten an Hand der Fig. 3a und 3b erkennen kann, einen Lagerabschnitt 5 trägt, an dem die Brille 6 und der Deckel 7 auf und zu schwenkbar befestigt sind. Je nachdem, wie der Verrastmechanismus für den Abdeckring 4 ausgeführt ist, kann der Abdeckring 4 in feinen Schritten in nahezu allen denkbaren Positionen zwischen zwei und 10 Uhr verrastet werden, oder, bei einfacheren Varianten, nur in einigen Vorzugspositionen in diesem Bereich, etwa auf 15 Uhr, 16:30 Uhr, 18 Uhr, 19:30 Uhr und 21 Uhr. Von den hier dargestellten Figuren zeigt die Fig. 3a den Fall, dass der Abdeckring so auf dem Schüsselgehäuse 3b verrastet ist, dass sich der Deckel und die Brille in Position 6 Uhr befinden. Demgegenüber zeigt die Fig. 3b den Fall, dass sich die Brille 6 und der Deckel 7 in Position 20 Uhr befinden.

Der Vorteil bei einer solchen, durch die unterschiedliche Positionierbarkeit zumindest der Brille verfeinerten Konstruktion ist der, dass die Gestalt der Brille an die Ergonomie des Toilettenbenutzers angepasst und links und rechts mit relativ breiten Schenkelauflagen versehen werden kann, so wie in Fig. 2 zu erkennen. Der entscheidende Punkt ist dabei, dass auch eine derartige Komfortbrille zwischen ihren Rändern (bzw. mit ihrem Außenrand) immer noch eine kreisringförmige Fläche einschließt - sodass die Brille trotz ihrer durch die Schenkelauflagen bedingten Asymmetrie auf dem oberen Randabschnitt der Toilettenschüssel in verschiedenen Verdrehpositionen montiert werden kann. Dabei ist der mehr oder minder rechtwinklig nach unten abgewinkelte Außenrand der Brille kreisförmig und derart an die kreisrunde Außenkontur des oberen Randabschnitts 3c angepasst, dass der Außenrand der Brille den oberen Randabschnitt übergreift und sich rundum oder zumindest an mehreren Stellen gegen den oberen Randabschnitt abstützt. Diese ebenfalls von den Brillen der üblichen Haushaltstoiletten abweichende Ausgestaltung verhindert, dass der Lagerabschnitt 4 bzw. die Lagerachse mit einem übermäßigen Biegemoment beaufschlagt wird. Nämlich dann, wenn der Benutzer auf der Brille "hin und her rutscht" und dadurch die Tendenz entsteht, dass die Brille in horizontaler Richtung nach links oder rechts gedrückt wird oder wenn der Benutzer - bei Vorhandensein eines entsprechenden Rast-Verdrehmechanismus für die Brille - an der geschlossenen Brille zieht, um sie zu verdrehen.

Auch der Toilettendeckel 7 weist bei diesem Ausführungsbeispiel eine speziell angepasste Form auf. Seine eigenartige Gestaltung ist in den Fig. 3a und 3b deutlich zu erkennen. Der Deckel 7 ist gerade nicht kreisrund, sondern an seinem linksseitigen Abschnitt 7L und seinem rechtsseitigen Abschnitt 7R gegenüber der kreisrunden Form beschnitten. Der Deckel ist also schmaler als die Brille. Dies hat den Vorteil, dass sich der Deckel in allen Relativpositionen, die er bestimmungsgemäß gegenüber dem Schüsselgehäuse 3b einnehmen kann, vollständig aufklappen lässt, insbesondere auch in den Positionen 16:30 Uhr und 19:30 Uhr. Dies sind Positionen, in denen ein vollständig kreisrunder Deckel frühzeitig seitlich an der Fahrzeugwand bzw. den die Installationsabdeckung bildenden hinteren Basisabschnitt 2b anschlagen würde. Dies würde dazu führen, dass er sich nicht um mehr als 90° aufklappen lässt und dadurch nicht in seiner aufgeklappten Position verbleibt, sondern den Toilettenbenutzer permanent "in den Rücken fällt". Leicht nachzuvollziehen ist dies an Hand der Fig. 3b, die das erfindungsgemäße Toilettensystem in eine designerisch ansprechend gestaltete Heck-Nasszelle eingebaut zeigt, die zum Wohnraum bzw. zum Durchgang ins Heck hin abgerundet ist. Ein völlig kreisrunder Deckel würde sich in einer derartigen Einbausituation vorzeitig an der Wand der Nasszelle und/oder dem Basisabschnitt 2b anstoßen.

Zu erkennen ist an Hand der Fig. 3a und 3b auch, dass der Deckel 7 die Brille 6 auch an seinem (von vorne gesehen) linksseitigen Abschnitt 7L und seinem rechtsseitigen Abschnitt 7R noch so weit übergreift, dass er in geschlossenem Zustand so von der Brille abgestützt wird, dass er durch das Gewicht des eventuell auf ihm sitzenden Benutzers keinen übermäßigen Biegebelastungen ausgesetzt wird.

Nicht zuletzt in Fig. 5 ist zu erkennen, dass auch am Deckel 7 Maßnahmen getroffen wurden, um zu verhindern, dass der Deckel ein unzulässig großes Biegemoment auf den Lagerabschnitt 4 überträgt, wenn der Benutzer auf ihm sitzt und dabei hin und her rutscht oder versucht am geschlossenen Deckel zu drehen - der Deckel ist mit einer an die Kontur der Brille angepassten, nach unten weisenden Nase ausgerüstet, die ihn gegen ein Verschieben in horizontal linker oder rechter Richtung an der Brille abstützt.

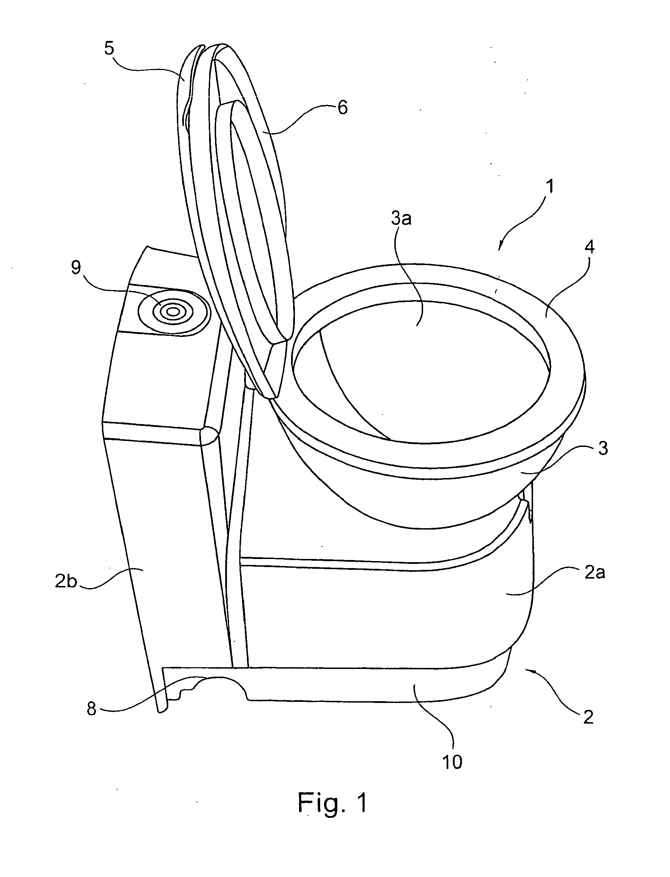

Eine Zusammenschau der Fig. 1, 2 und 6 zeigt, dass das bestimmungsgemäß fäkalbeaufschlagbare Toilettenbecken 3a von allen Seiten aus eine relativ starke Neigung gegenüber dem annähernd zentrischen Auslass des Toilettenbeckens aufweist. Anders als hier gezeigt, kann der Auslass auch vollständig zentrisch angeordnet werden. Man gewährleistet dadurch, dass auf allen bestimmungsgemäß möglichen Sitzpositionen eine gleichartig optimale Fäkalabfuhr erfolgt. Im vorliegenden Ausführungsbeispiel ist der Auslass jedoch leicht exzentrisch angeordnet. Damit wird der Tatsache Rechnung getragen, dass bei einer solchen Toilette zwar Sitzpositionen zwischen 3 und 9 Uhr ohne weiteres möglich sind, in der Praxis aber in den meisten Fällen Sitzpositionen zwischen 17 und 19 Uhr eingenommen werden. Dementsprechend ist die von diesem Ausführungsbeispiel gezeigte Toilette auf diese Sitzpositionen hin optimiert.

Die Fig. 6 gibt Einblick in die dem Benutzer (von der Nasszelle aus gesehen) im Regelfall verborgene Technik, die nur von der Serviceklappe durch die Fahrzeugwand her zugänglich ist. Die Fig. 6 zeigt den die Installationsabdeckung bildenden Basisabschnitt 2b, der in den Tankraum bildenden Basisabschnitt 2a übergeht, von hinten her, also von der Serviceklappe aus gesehen. Klar zu erkennen ist der Tank 15, der in Betrachtungsrichtung eingeschoben und entgegen Betrachtungsrichtung wieder herausgezogen werden kann. Der Tank weist einen um eine senkrechte Achse drehbaren Entleerungsstutzen 16 auf, sowie hier nicht zu sehende Räder und einen Trolleyhandgriff 17. Auf Grund seiner Räder und seines Handgriffs kann der volle Tank nach seinem Herausnehmen aus dem Fahrzeug wie ein Gepäckkoffer bequem zur Entsorgungsstation gefahren werden. Ferner sieht man die elektrische Verkabelung, die Spülwasserpumpe 18 und die zugehörige Spülwasseransaugleitung 19. Die Spülwasserpumpe 18 wird über das Bedienpaneel 20, das auch in den anderen Figuren zu sehen ist, vom Benutzer betätigt.

Die Fig. 5 zeigt das Toilettensystem 1 von der Vorderseite her. Man erkennt, deutlich, dass in der Vorderwand des den Tankraum bildenden Basisabschnitts 2a eine Betätigungsöffnung 11 angebracht ist, in die der am Tank 15 feste Handgriff 12 zur Betätigung des Tankverschlusses 13 hineinragt. Der Tankverschluss 13 arbeitet bei diesem Ausführungsbeispiel als eine Art guillotineartiger Schieber - zieht der Toilettenbenutzer den Handgriff 12 aus der Bildebene der Fig. 5 heraus, so öffnet er den Tank 15 und damit auch den Auslass des Toilettenbeckens 3a, wodurch die Fäkalien abgeführt werden können. Drückt er den Handgriff 12 wieder in Richtung der Zeichenebene der Fig. 5 hinein, dann schließt er damit den Tank 15 und damit auch den Auslass des Toilettenbeckens 3a.

Zuletzt ist noch auf die Ausführungsform gemäß Fig. 9 hinzuweisen. Hier wurde in den Zwischenraum zwischen dem Schüsselgehäuse 3b und dem Toilettenbecken ein schlauchartiger Weichtank 22 eingelegt, dessen Inhalt punktiert dargestellt ist. Dieser Weichtank 22 kann im vorliegenden Fall über einen im Bereich des Brillenscharniers 5 nach außen ragenden Stutzen mit Sanitärzusatz befüllt werden - ähnlich, wie ein Scheibenwaschflüssigkeitsbehälter eines PKW, der ja heute auch meist als Weichbeutel ausgeführt, in einem Karosseriehohlraum untergebracht und nur über seinen halsartig in den Motorraum hineinragenden Einfüllstutzen zugänglich ist. Der Tank fasst hier einen Vorrat von ca. 5 Litern, kann aber, je nach Ausgestaltung des Schüsselgehäuses 3b größer oder kleiner sein. Es ist eine hier nicht gezeigte elektrische Zusatzpumpe vorgesehen, die auf Knopfdruck eine voreingestellte Menge an Sanitärzusatz zudosiert, so dass nicht mehr nach jedem Entleeren des Fäkaltanks mit den Flaschen mit Sanitärzusätzen hantiert werden und die benötigte Menge manuell abgemessen werden muss.

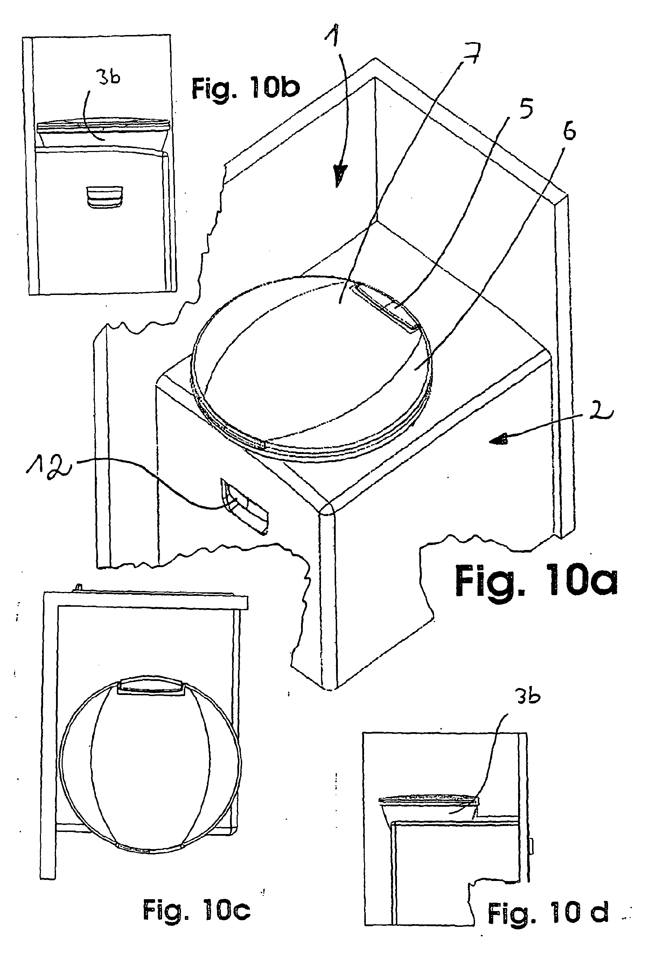

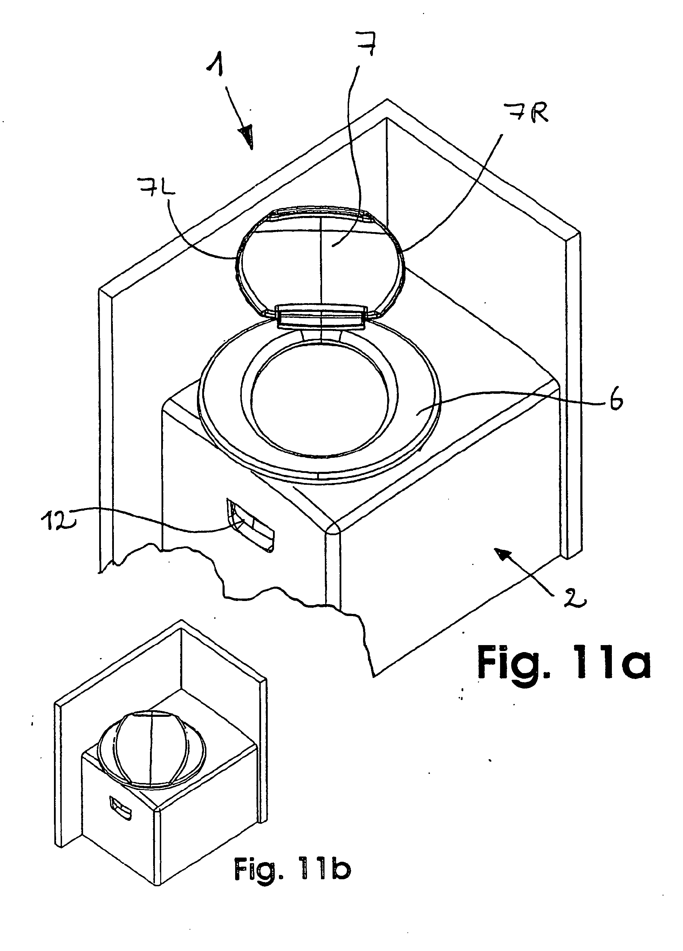

Die Figuren 10 und 11 zeigen ein weiteres Ausführungsbeispiel der Erfindung, nämlich in der Form einer sogenannten "Banklösung". Anders als bei dem zuvor beschriebenen Ausführungsbeispiel, das als "Stand-alone-Lösung" konzipiert ist, ist hier die Toilettenschüssel 3 weitgehend in die zu einer kastenartigen Bank erweiterten Basis 2 integriert, so dass im Wesentlichen nur der obere Randabschnitt der Toilette 3 über die bankartige Basis hinausragt . Einer solche Banklösung wird von bestimmten Benutzerkreisen aus designerischen, aber auch aus praktischen Gründen der Vorzug gegeben - der Bereich um die Toilette herum lässt sich hier meist leichter reinigen, als bei "Stand-alone-Lösungen", da schlecht zugängliche Abschnitte zwischen der Toilette und den Wänden der Nasszelle bei der "Bank-Lösung" vermieden werden. Zudem ergeben sich Ablageflächen im rückwärtigen Bereich der Toilette.

Wie sich unmittelbar aus den diversen Figuren 10 und 11 erschließt, bietet die erfindungsgemäße Positionierbarkeit der Brille 6 auch bei einer solchen Bank-Lösung Vorteile. Denn zumindest der Fahrzeughersteller kann über die Lage der Brille 6 entscheiden. Vorteilhafterweise kann jedoch auch hier der Benutzer selbst Hand anlegen um die Brille 6 zusammen mit dem Deckel 7 wunschgemäß zu positionieren - und so z. B. die Brille 6 so einstellen, dass die Toilette im konkreten Fall schnell einmal in Position 16 Uhr benutzt werden kann, etwa weil in der Ecke Nasszelle (in Position 20 Uhr) gerade der klamme Skianzug zum Trocknen aufgehängt ist, der nicht erst umständlich aus der Nasszelle entfernt werden soll.

Insbesondere an Hand der Fig. 11 a wird dabei nochmals augenfällig, wie praktisch der gegenüber der Brille 6 flankenseitig (7L, 7R) schmäler ausgeführte Deckel 7 ist.

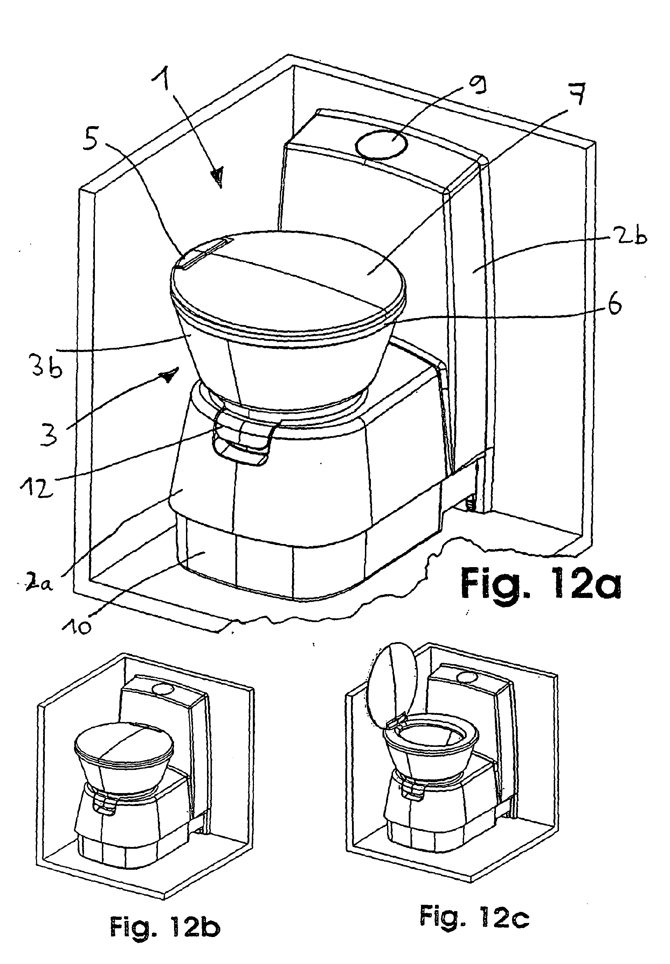

Soweit es nicht darauf ankommt, ob der Deckel 7 nun besonders praktisch (weil in nahezu allen Positionen ungehindert aufklappbar) ist oder nicht, sondern vordringlich Wert auf gestalterische Aspekte und die oft als hygienischer angesehene Vollabdeckung der Brille 6 gelegt wird, können sowohl die "Stand-alone-Lösung" als auch die "Bank-Lösung" mit einem die Brille vollständig abdeckenden Deckel versehen sein - so, wie das die Figuren 12 an einem dritten Ausführungsbeispiel in Form einer "Stand-alone-Lösung" illustrieren, die zusätzlich auch noch mit einem eine größere Installationsabdeckung bildenden Basisabschnitt 2b ausgerüstet ist..

### Bezugszeichenliste

- (1): Toilettensystem
- (2): Basis
- (2a): Tankraum bildender Basisabschnitt
- (2b): Installationsabdeckung bildender Basisabschnitt
- (3): Toilettenschüssel
- (3a): Toilettenbecken
- (3b): Toilettenschüsselgehäuse
- (4): Abdeckring
- (5): Lagerabschnitt
- (6): Brille
- (7): Deckel
- (7L): Linksseitiger Abschnitt
- (7R): Rechtsseitiger Abschnitt
- (8): Installationsdurchlass
- (9): Bedienpaneel
- (10): Bodenwannenflansch
- (11): Betätigungsöffnung
- (12): Handgriff zur Betätigung des Tankverschlusses
- (13): Tankverschluss
- (14): Verteilerring
- (15): Tank
- (16): Nicht vergeben
- (17): Nicht vergeben
- (18): Nicht vergeben
- (19): Nicht vergeben
- (20): Verteilerring
- (21): Lochring
- (22): Schlauch- bzw. Falttank

## Patentansprüche

1. Toilettensystem (1) für den Einbau in ein Fahrzeug, wobei das Toilettensystem die nachfolgend genannten Komponenten umfasst, nämlich eine fahrzeugfest zu installierende Basis (2) mit einem oberen Wandabschnitt, eine vom oberen Wandabschnitt der Basis getragene Toilettenschüssel (3) mit einem vorzugsweise eine Brille (6) tragenden oberen Randabschnitt, einen in Gebrauchsposition zumindest teilweise unterhalb des oberen Wandabschnitts angeordneten Abwasserrückhaltetank (15) und eine Führungs-, Halte- und Kupplungseinrichtung, die so gestaltet ist, dass der entsprechend geformte Abwasserrückhaltetank - vorzugsweise von der Fahrzeugaußenseite her - vom Nutzer aus seiner Gebrauchsposition, in der er flüssigkeitsdicht mit dem Ablauf der Toilettenschüssel (3) verbindbar ist, herausgezogen, vom Fahrzeug entfernt und danach wieder in besagte Gebrauchsposition gebracht werden kann, wobei das Toilettensystem (1) so gestaltet ist, dass auch nach fahrzeugfester Installation der Basis zwischen verschiedenen bestimmungsgemäßen Sitzpositionen auf der Toilettenschüssel (3) gewählt werden kann, in denen der Nutzer das Toilettensystem (1) benutzen kann, **dadurch gekennzeichnet, dass** die Toilettenschüssel (3) in einer relativ zur Basis vorgegebenen Position fest mit der Basis (2) verbunden ist, dass zumindest der obere Randabschnitt der Toilettenschüssel (3) im Wesentlichen rund ist und die Brille (6) in verschiedenen, unterschiedlich gegenüber der Vertikalachse des oberen Randabschnitts gedrehten Positionen an der Toilettenschüssel (3) positioniert werden kann und/oder die Brille im Wesentlichen rund ist, sodass die Brille keine bevorzugte Sitzposition vorgibt, sondern der Benutzer ohne nennenswert spürbare Unterschiede in Bezug auf den Sitzkomfort in unterschiedlich gegenüber der Vertikalachse des oberen Randabschnitts gedrehten Positionen auf der Toilette Platz nehmen kann.

2. Toilettensystem (1) nach Anspruch 1, **dadurch gekennzeichnet, dass** der obere Randabschnitt der Toilettenschüssel (3) von einem in verschiedenen Verdrehstellungen - vorzugsweise werkzeuglos und durch Verrastung - montierbaren Abdeckring (4) übergriffen wird, der an einer Seite einen Lagerabschnitt (5) trägt, an dem die Brille (6) und vorzugsweise auch ein die Brillenöffnung abdeckender Deckel (7) auf und zu schwenkbar angelenkt sind.

3. Toilettensystem (1) nach Anspruch 2, **dadurch gekennzeichnet, dass** der Abdeckring (4) so ausgestaltet und am oberen Randabschnitt gehalten ist, dass er zusammen mit der an ihm gehaltenen Brille 6 und ggf. auch dem an ihm gehaltenen Deckel (7) durch den Toilettenbenutzer verdreht werden kann, in eine ihm als individuellem Benutzer momentan genehme Position.

4. Toilettensystem (1) nach Anspruch 3, **dadurch gekennzeichnet, dass** der Abdeckring (4) nach Art einer drehbaren Gleitführung auf dem oberen Randabschnitt läuft, die durch einen Rastmechanismus blockiert wird, wobei der Rastmechanismus durch den Toilettenbenutzer werkzeuglos deaktiviert werden kann, um den Abdeckring zu verdrehen, ohne ihn vom oberen Randabschnitt abzunehmen.

5. Toilettensystem (1) nach einem der vorhergehenden Ansprüche, **dadurch gekennzeichnet, dass** das Toilettensystem (1) einen Deckel (7) umfasst, der in geschlossenem Zustand im Wesentlichen nur die Öffnung der Brille (6) abdeckt, wobei zumindest ein wesentlicher Teil der Brille (6) im linken und rechten Seitenbereich (7L, 7R) des Deckels (7) nicht vom Deckel übergriffen wird, sondern auch bei geschlossenem Deckel frei bleibt.

6. Toilettensystem (1) nach Anspruch 2 bzw. einem der vorhergehenden Ansprüche in Verbindung mit Anspruch 2, **dadurch gekennzeichnet, dass** zwischen dem Abdeckring (4) und der Toilettenschüssel (3) ein vorzugsweise als separates Bauteil gestalteter Verteilerring angeordnet ist, der ein Kanalsystem bildet, derart, dass er das Spülwasser von einer zentralen Spülwassereinspeisung ausgehend den oberen Randabschnitt des Toilettenbeckens entlang leitet und über entsprechende Öffnungen ringsum entlang des oberen Randabschnitts in das Toilettenbecken (3a) einleitet, vorzugsweise durch einen Spalt zwischen dem den Verteilerring übergreifenden Abdeckring und dem Toilettenbecken (3a).

7. Toilettensystem (1) nach Anspruch 6, **dadurch gekennzeichnet, dass** die Öffnungen als lokale Löcher ausgestaltet sind, die in Abstimmung auf den nominalen Einspeisedruck des Spülwassers so dimensioniert und ausgerichtet sind, dass das Spülwasser nach Art eines Vorhangs aus einer Anzahl einzelner Strahlen in das Toilettenbecken (3a) eingespült wird, der sich im Wesentlichen den gesamten Umfang des oberen Randabschnitt entlang erstreckt, derart, dass sämtliche Oberflächenbereiche des Toilettenbeckens (3a), auf denen sich bei bestimmungsgemäßer Benutzung des Toilettensystems (1) feste Fäkalien ablagern können, bestrichen werden.

8. Toilettensystem (1) nach Anspruch 7, **dadurch gekennzeichnet, dass** die Löcher eine Ausgestaltung aufweisen, die dauerhafte Kalkablagerungen hemmt.

9. Toilettensystem (1) nach Anspruch 8, **dadurch gekennzeichnet, dass** der Verteilerring ein Zweikomponentenbauteil aus einem tragenden Kunststoff und einem weichelastischen Material ist, derart, dass die die austretenden Spülwasserstrahlen formenden Löcher in das tragende Kunststoffteil eingearbeitet sind und an dem ihre Austrittsöffnung begrenzenden Rand einen Wulst aus weichelastischem Material tragen, wobei der Wulst vorzugsweise in das Innere des Verteilerrings hineinragt.

10. Toilettensystem (1) nach einem der vorhergehenden Ansprüche, **dadurch gekennzeichnet, dass** das die bestimmungsgemäß fäkalbeaufschlagbare Innenoberfläche des Toilettenbeckens (3a) an allen Stellen hinreichende Neigung gegenüber dem Auslass des Toilettenbeckens (3a) aufweist, um eine Rampe für das im Wesentlichen selbsttätige Abrutschen fester Fäkalien hin zum Auslass zu bilden.

11. Toilettensystem (1) nach Anspruch 10, **dadurch gekennzeichnet, dass** die bestimmungsgemäß fäkalbeaufschlagbare Innenoberfläche des Toilettenbeckens und vorzugsweise das ganze Toilettenbecken aus Sanitärkeramik besteht.

12. Toilettensystem (1) nach einem der Ansprüche 10 oder 11, **dadurch gekennzeichnet, dass** die fäkalbeaufschlagbare Innenoberfläche des Toilettenbeckens eine Hygieneschicht ist bzw. mit einer dauerhaft mit ihr verbundenen, Hygieneschicht ausgerüstet ist, vorzugsweise in Form einer schmutzabweisenden Nanoschicht.

13. Toilettensystem (1) nach einem der vorhergehenden Ansprüche, **dadurch gekennzeichnet, dass** die Basis (2) eine Wand aufweist, vorzugsweise in Form einer in etwa vertikal orientierte Vorderwand, die mit dem Abwassertank (15) derart abgestimmt ist, dass die Wand eine Betätigungsöffnung aufweist, in der bei in Gebrauchsposition befindlichem Abwassertank (15) der vom Abwassertank getragene Handgriff (12) zur Betätigung des Verschlusses (13) erscheint, mittels dessen der Abwassertank (15) und damit auch die flüssigkeitsdichte Verbindung zwischen dem Abwassertank und dem Auslass der Toilettenschüssel 3 geöffnet und geschlossen werden kann.

14. Toilettensystem (1) nach Anspruch 13, **dadurch gekennzeichnet, dass** im Bereich der Betätigungsöffnung eine schwenkbare Klappe vorgesehen ist, die beim Einsetzen des Abwassertanks (15) aufgedrückt und durch den Abwassertank (15) in ihrer geöffneten Position außerhalb der Betätigungsöffnung gehalten wird und nach Entfernen des Abwassertanks in die Betätigungsöffnung hineinschwenkt und diese verschließt, vorzugsweise weitgehend geruchsdicht.

15. Toilettensystem (1) nach Anspruch 14, **dadurch gekennzeichnet, dass** von der Klappe eine Signalwirkung ausgeht, die darauf hinweist, dass das Toilettensystem wegen des herausgenommenen Tanks nicht betriebsbereit ist.

16. Toilettensystem (1) nach einem der vorhergehenden Ansprüche, **dadurch gekennzeichnet, dass** die Projektion der Toilettenschüssel (3) in vertikaler Richtung von oben nach unten im Wesentlichen nicht über die Grundfläche der Basis (2) hinausragt.

17. Fahrzeug, insbesondere Campingfahrzeug mit einem Toilettensystem (1) nach einem der vorhergehenden Ansprüche.

18. Verwendung eines Toilettensystems (1) nach einem der vorhergehenden Ansprüche zur Ausrüstung eines Fahrzeuges mit einer in einer beengten Nasszelle angeordneten Toilette, deren Sitzposition durch die Festlegung der Einbaulage des Abwassertanks am Fahrzeug nicht endgültig auf eine einzige reguläre Sitzposition festgelegt wird.

## Claims

1. A toilet system (1) for installation in a vehicle, the toilet system comprising the components named hereafter, namely, a base (2) to be rigidly fixed to the vehicle and having an upper wall portion, a toilet bowl (3) supported by the upper wall portion of the base and having an upper edge portion preferably supporting a toilet seat (6), a sewage holding tank (15) arranged in the position of use at least partially beneath the upper wall portion, and a guiding, retaining and coupling device, which is designed in such a way that the user, preferably from the outside of the vehicle, is able to pull the suitably shaped sewage holding tank out of its position of use, in which it can be connected in a liquid-tight manner to the outflow of the toilet bowl (3), remove it from the vehicle and then bring it back into the said position of use, wherein the toilet system (1) is designed in such a way that even after the base has been rigidly fixed to the vehicle, it is possible to choose between different intended sitting positions on the toilet bowl (3) in which the user can use the toilet system (1), **characterised in that** the toilet bowl (3) in rigidly connected to the base (2) in a predetermined position relative to the base, **in that** at least the upper edge portion of the toilet bowl (3) is substantially round and the toilet seat (6) can be positioned on the toilet bowl (3) in different positions rotated differently with respect to the vertical axis of the upper edge portion and/or the toilet seat is substantially round so that the toilet seat does not predefine any preferred sitting position, rather the user is able to sit down on the toilet in positions rotated differently with respect to the vertical axis of the upper edge portion with no appreciably perceptible differences with regard to comfort level.

2. A toilet system (1) according to claim 1, **characterised in that** a cover ring (4) mountable in different rotated positions - preferably without the use of tools and by means of a catch mechanism - engages over the upper edge portion of the toilet bowl (3), the cover ring carrying at one side a bearing portion (5) at which the toilet seat (6) and preferably also a lid (7) covering the toilet seat opening are pivotally hinged so as to open and close.

3. A toilet system (1) according to claim 2, **characterised in that** the cover ring (4) is so designed and retained at the upper edge portion that together with the toilet seat (6) held on the cover ring and optionally also the lid (7) held on the cover ring, it can be rotated by the toilet user into a position that at that moment suits him as an individual user.

4. A toilet system (1) according to claim 2, **characterised in that** the cover ring (4) runs on the upper edge portion in the manner of a rotatable sliding guide, which is blocked by a catch mechanism, wherein the catch mechanism can be disabled by the toilet user without the use of tools in order to rotate the cover ring without removing it from the upper edge portion.

5. A toilet system (1) according to any one of the preceding claims, **characterised in that** the toilet system (1) comprises a lid (7), which in the closed state covers substantially only the opening of the toilet seat (6), wherein at least a substantial part of the toilet seat (6) in the left and right lateral region (7L, 7R) of the lid (7) is not overlapped by the lid, but remains free even with the lid closed.

6. A toilet system (1) according to claim 2 or any one of the preceding claims in conjunction with claim 2, **characterised in that** between the cover ring (4) and the toilet bowl (3) there is arranged a distributing ring, preferably in the form of a separate component, which forms a channel system such that it directs the flushing water, starting from a central flushing water feed, along the upper edge portion of the toilet bowl and introduces it via corresponding openings all around the upper edge portion into the toilet bowl (3a), preferably though a gap between the toilet bowl (3a) and the cover ring overlapping the distributing ring.

7. A toilet system (1) according to claim 6, **characterised in that** the openings are in the form of local holes, which are dimensioned and oriented to match the nominal feed pressure of the flushing water in such a way that the flushing water is flushed into the toilet bowl (3a) in the manner of a curtain comprising a number of individual jets that extends substantially around the entire circumference of the upper edge portion such that all surface areas of the toilet bowl (3a) on which solid excreta may be deposited when the toilet system (1) is used as intended are flushed with water.

8. A toilet system (1) according to claim 7, **characterised in that** the holes are configured to inhibit lasting lime scale depositions.

9. A toilet system (1) according to claim 8, **characterised in that** the distributing ring is a two-component assembly comprising a supporting plastics material and a flexible material, such that the holes forming the emerging flushing water jets are made in the supporting plastics material part and carry a bead of flexible material at their edge defining the outlet opening, the bead preferably projecting into the interior of the distributing ring.

10. A toilet system (1) according to any one of the preceding claims, **characterised in that** the inner surface of the toilet bowl (3a) subject, in proper use of the system, to the action of excreta has at all points an adequate inclination with respect to the outlet of the toilet bowl (3a), in order to form a chute for the substantially automatic slippage of solid excreta towards the outlet.

11. A toilet system (1) according to claim 10, **characterised in that** the inner surface of the toilet bowl subject, in proper use of the system, to the action of excreta, and preferably the entire toilet bowl, consists of sanitary ware.

12. A toilet system (1) according to claim 10 or 11, **characterised in that** the inner surface of the toilet bowl subject to the action of excreta is a hygiene layer or is fitted with a hygiene layer permanently connected thereto, preferably in the form of a contamination-repelling nanolayer.

13. A toilet system (1) according to any one of the preceding claims, **characterised in that** the base (2) comprises a wall, preferably in the form of an approximately vertically oriented front wall, which is co-ordinated with the sewage tank (15) in such a way that the wall has an operating opening, in which, when the sewage tank (15) is in the position of use, the handle (12) supported by the sewage tank (15) for operating the catch (13) appears, by means of which handle the sewage tank (15), and hence also the fluid-tight connection between the sewage tank and the outlet of the toilet bowl (3), can be opened and closed.

14. A toilet system (1) according to claim 13, **characterised in that** in the region of the operating opening there is provided a pivotable flap, which upon insertion of the sewage tank (15) is pressed open and is held in its opened position by the sewage tank (15) away from the operating opening and, after removal of the sewage tank, pivots into the operating opening and closes this, preferably in a largely sealed manner to prevent odours.

15. A toilet system (1) according to claim 14, **characterised in that** the flap provides a signalling effect, which indicates that the toilet system is not operational owing to removal of the tank.

16. A toilet system (1) according to any one of the preceding claims, **characterised in that** the projection of the toilet bowl (3) in the vertical direction from top to bottom does not extend substantially beyond the floor area of the base (2).

17. A vehicle, in particular a recreational vehicle having a toilet system (1) according to any one of the preceding claims.

18. Use of the toilet system (1) according to any one of the preceding claims for equipping a vehicle having a toilet arranged in a confined shower unit, the sitting position of which toilet determined by the fixing of the installation position of the sewage tank on the vehicle is not irrevocably restricted to a single regular sitting position.

## Revendications

1. Système de toilettes (1) destiné à un montage dans un véhicule, le système de toilettes comportant les composants indiqués par la suite, à savoir une base (2) à installer de manière fixe dans le véhicule et ayant une partie de paroi supérieure, une cuvette de toilettes (3) supportée par la partie de paroi supérieure et ayant une partie périphérique supérieure supportant de préférence une lunette (6), un réservoir de retenue d'eaux usées (15) agencé, en position d'utilisation, au moins en partie sous la partie de paroi supérieure, et un dispositif de guidage, de maintien et de liaison conçu de telle sorte que l'utilisateur peut extraire - de préférence depuis le côté extérieur du véhicule - le réservoir de retenue d'eaux usées, conformé de manière correspondante, de sa position d'utilisation, dans laquelle il peut être relié de manière étanche aux liquides à l'évacuation de la cuvette de toilettes (3), l'enlever du véhicule et ensuite le replacer dans ladite position d'utilisation, dans lequel le système de toilettes (1) est conçu de telle sorte que même après que la base a été installée de manière fixe dans le véhicule, il est possible de choisir entre différentes positions assises convenables prévues sur la cuvette de toilettes (3), dans lesquelles l'utilisateur peut utiliser le système de toilettes (1), **caractérisé en ce que** la cuvette de toilettes (3) est reliée de manière fixe à la base (2) dans une position prédéterminée par rapport à la base, qu'au moins la partie périphérique supérieure de la cuvette de toilettes (3) est sensiblement ronde et la lunette (6) peut être positionnée sur la cuvette de toilettes (3) dans différentes positions tournées de manières différentes par rapport à l'axe vertical de la partie périphérique supérieure et/ou la lunette est sensiblement ronde de telle sorte que la lunette ne donne aucune position assise préférée, mais l'utilisateur peut prendre place sur les toilettes sans différence sensible notable en ce qui concerne le confort d'assise dans des positions tournées de manières différentes par rapport à l'axe vertical de la partie périphérique supérieure.

2. Système de toilettes (1) selon la revendication 1, **caractérisé en ce que** la partie périphérique supérieure de la cuvette de toilettes (3) est surmontée d'un anneau de recouvrement (4) pouvant être monté dans différentes positions de rotation - de préférence sans outil et par encliquetage, ledit anneau portant sur un côté une partie de support (5) sur laquelle la lunette (6) et de préférence également un couvercle (7) recouvrant l'ouverture de la lunette sont articulés de manière à pouvoir pivoter jusqu'aux positions ouverte et fermée.

3. Système de toilettes (1) selon la revendication 2, **caractérisé en ce que** l'anneau de recouvrement (4) est conçu et maintenu sur la partie périphérique supérieure de telle sorte que l'utilisateur des toilettes peut le tourner conjointement avec la lunette (6) maintenue sur lui et éventuellement également avec le couvercle (7) maintenu sur lui, dans une position momentanément confortable pour lui en tant qu'utilisateur individuel.

4. Système de toilettes (1) selon la revendication 3, **caractérisé en ce que** l'anneau de recouvrement (4) s'étend sur la partie périphérique supérieure à la manière d'un guidage à glissement rotatif qui est bloqué par un mécanisme d'encliquetage, dans lequel l'utilisateur des toilettes peut désactiver le mécanisme d'encliquetage sans outil afin de tourner l'anneau de recouvrement sans avoir à le retirer de la partie périphérique supérieure.

5. Système de toilettes (1) selon l'une des revendications précédentes, **caractérisé en ce que** le système de toilettes (1) comporte un couvercle (7) qui recouvre pratiquement uniquement l'ouverture de la lunette (6) à l'état fermé, dans lequel au moins une partie notable de la lunette (6) n'est pas surmontée du couvercle dans les zones latérales gauche et droite (7L, 7R) du couvercle (7), mais reste également libre lorsque le couvercle est fermé.

6. Système de toilettes (1) selon la revendication 2 ou l'une des revendications précédentes en liaison avec la revendication 2, **caractérisé en ce qu'**entre l'anneau de recouvrement (4) et la cuvette de toilettes (3) est agencé un anneau de distribution de préférence conçu comme un composant séparé, ledit anneau de distribution formant un système de canal de telle sorte qu'il conduit l'eau de chasse sortant d'une alimentation centrale en eau de chasse le long de la partie périphérique supérieure du bac de toilettes et l'introduit dans le bac de toilettes (3a) par des ouvertures correspondantes tout autour du long de la partie périphérique supérieure, de préférence à travers une fente entre l'anneau de recouvrement surmontant l'anneau de distribution et le bac de toilettes (3a).

7. Système de toilettes (1) selon la revendication 6, **caractérisé en ce que** les ouvertures sont conçues sous la forme de trous locaux qui sont dimensionnés en fonction de la pression nominale d'alimentation en eau de chasse et sont conçus de telle sorte que l'eau de chasse est introduite dans le bac de toilettes (3a) à la manière d'un rideau formé d'une pluralité de jets individuels, ledit rideau s'étendant sensiblement le long de la circonférence complète de la partie périphérique supérieure, de sorte que l'ensemble des zones de surface du bac de toilette (3a) sur lesquelles des matières fécales solides peuvent se déposer lors d'une utilisation appropriée du système de toilettes (1), est balayé.

8. Système de toilettes (1) selon la revendication 7, **caractérisé en ce que** les trous ont une configuration qui empêche des dépôts calcaires permanents.

9. Système de toilettes (1) selon la revendication 8, **caractérisé en ce que** l'anneau de distribution est une pièce à deux composants constituée d'une matière plastique porteuse et d'une matière souple et élastique de telle sorte que les trous formant des jets d'eau de chasse sortants sont usinés dans la partie porteuse en matière plastique et portent un bourrelet en matière souple et élastique au bord délimitant leur ouverture de sortie, dans lequel le bourrelet pénètre de préférence dans l'intérieur de l'anneau de distribution.

10. Système de toilettes (1) selon l'une des revendications précédentes, **caractérisé en ce que** la surface intérieure du bac de toilettes (3a) pouvant entrer en contact avec des matières fécales de manière normale présente à tous les endroits une inclinaison suffisante par rapport à l'évacuation du bac de toilettes (3a) afin de former une rampe pour un glissement sensiblement automatique des matières fécales solides jusqu'à la sortie.

11. Système de toilettes (1) selon la revendication 10, **caractérisé en ce que** la surface intérieure du bac de toilettes pouvant entrer en contact avec des matières fécales de manière normale est constituée d'une céramique sanitaire, ainsi que, de préférence, la totalité du bac de toilettes.

12. Système de toilettes (1) selon l'une des revendications 10 ou 11, **caractérisé en ce que** la surface intérieure du bac de toilettes pouvant entrer en contact avec des matières fécales est une couche hygiénique ou est munie d'une couche hygiénique reliée de manière permanente à elle, ayant de préférence la forme d'une nanocouche rejetant la salissure.

13. Système de toilettes (1) selon l'une des revendications précédentes, **caractérisé en ce que** la base (2) comporte une paroi, ayant de préférence la forme d'une paroi avant orientée de manière sensiblement verticale, ladite paroi étant adaptée au réservoir d'eaux usées (15) de telle sorte que la paroi comporte une ouverture d'actionnement dans laquelle apparaît la poignée (12) supportée par le réservoir d'eaux usées pour l'actionnement du dispositif de fermeture (13) lorsque le réservoir d'eaux usées (15) est en position d'utilisation, poignée au moyen de laquelle le réservoir d'eaux usées (15) et ainsi également la liaison étanche aux liquides entre le réservoir d'eaux usées et l'évacuation de la cuvette de toilettes (3) peuvent être ouverts et fermés.

14. Système de toilettes (1) selon la revendication 13, **caractérisé en ce que** dans la zone de l'ouverture d'actionnement est prévu un volet pivotant qui est ouvert en poussant lors de l'utilisation du réservoir d'eaux usées (15) et maintenu dans sa position ouverte à l'extérieur de l'ouverture d'actionnement par le réservoir d'eaux usées (15) et qui, après le retrait du réservoir d'eaux usées, pivote en rentrant dans l'ouverture d'actionnement et ferme celle-ci, de préférence de manière sensiblement étanche aux odeurs.

15. Système de toilettes (1) selon la revendication 14, **caractérisé en ce que** le volet a pour effet un signal qui indique que le système de toilettes n'est pas en ordre de marche en raison du réservoir retiré.

16. Système de toilettes (1) selon l'une des revendications précédentes, **caractérisé en ce que** la projection de la cuvette de toilettes (3) dans une direction verticale du haut vers le bas ne fait sensiblement pas saillie au-delà de la surface de base de la base (2).

17. Véhicule, en particulier un véhicule de camping, muni d'un système de toilettes (1) selon l'une des revendications précédentes.

18. Utilisation d'un système de toilettes (1) selon l'une des revendications précédentes pour équiper un véhicule de toilettes agencées dans un bloc-bain étroit, dont la position assise n'est pas définitivement fixée dans une position assise régulière unique par la détermination de la position de montage du réservoir d'eaux usées sur le véhicule.
